# EUROPEAN PATENT SPECIFICATION

(11) **EP 2 230 279 B1**
(45) Date of publication and mention of the grant of the patent: **20.09.2017**
(21) Application number: 10002252.4
(22) Date of filing: 04.03.2010
(51) Int. Cl.: C09B 67/00, C09C 1/56, C09D 11/00

(54) **METHOD FOR MANUFACTURING PIGMENT DISPERSION, AND AQUEOUS INK FOR INKJET RECORDING**
VERFAHREN ZUR HERSTELLUNG EINER PIGMENTDISPERSION UND WÄSSRIGE TINTE ZUR TINTENSTRAHLAUFZEICHNUNG
PROCÉDÉ DE FABRICATION DE DISPERSION DE PIGMENT, ET ENCRE AQUEUSE POUR ENREGISTREMENT À JET D'ENCRE

(30) Priority: 19.03.2009 JP 2009067824
(43) Date of publication of application: 22.09.2010
(73) Proprietor: FUJIFILM Corporation, Minato-ku Tokyo (JP)
(72) Inventor: Yamamoto, Hiroshi, Ashigarakami-gun Kanagawa (JP)
(74) Representative: Hoffmann Eitle

(56) References cited:
- EP-A1- 1 728 837
- GB-A- 2 349 153
- US-A- 6 003 795
- US-A1- 2007 265 372
- US-B1- 6 395 804

## Description

### BACKGROUND OF THE INVENTION

### [Field of the Invention]

The present invention is related to a method for manufacturing a pigment dispersion, and a method for inkjet recording.

### [Description of the Related Art]

With respect to a recording medium for inkjet recording and ink used therefor, various technologies are being studied in order to obtain a high quality recorded material excellent in color optical density, ink fixing property, resolution and the like. As a colorant used in ink for inkjet recording, pigments are widely used from the view point of resistance to light, resistance to water and the like. In addition, in a recording liquid for an inkjet printer, carbon black is generally used as a pigment for black ink.

When carbon black is used as a pigment for black ink, high definition and advanced color rendering properties cannot be obtained unless carbon black has a small particle size and is stably dispersed. In particular, with respect to a recording liquid for an inkjet printer, the presence of pigment particles that are insufficiently dispersed is directly related to the problem of clogging of a nozzle in a discharge head. However, since carbon black has a fine primary particle diameter and a strong tendency for secondary aggregation, innovation is required to achieve a fine dispersion and also stably maintain particle diameter.

Under such circumstances, as a carbon black pigment which can be used for aqueous ink for inkjet recording, an aqueous dispersion for inkjet recording including a carbon black pigment coated with a water-insoluble polymer has been proposed (for example, see Japanese Patent Application Laid-Open (JP-A) No. 2007-169506). According to this document, such a dispersion is excellent in image density, image uniformity and the like.

US-A-6,003,795 discloses a method of preparing a concentrated aqueous suspension of a finely ground particulate material by a multistage grinding process in which an aqueous suspension of the particulate material is passed to and treated by grinding in each of a series of grinding stages, wherein a water soluble polycarboxylate dispersing agent for the particulate material is added to the suspension at each of a plurality of dispersion agent addition sites or stages. The invention is characterised in that the aqueous suspension when treated by grinding in at least one of the grinding stages has a pH on the inclusive range 8.5 to 9.8. Using the method described, suspensions can be prepared which are rheologically stable with time, and which contain a relatively high proportion by weight of a finely divided pigment.

US-B-6,395,804 discloses a water-based pigmented ink comprising a suspension of:
a) pigment particles, and
b) a dispersant for dispersing hydrophobic particles in an aqueous system comprising a nonpolymerized hydrophobic segment comprised of a hydrocarbon moiety that can adsorb to hydrophobic surfaces, which hydrophobic segment is joined by a chain transfer agent to at least one terminal hydrophilic segment comprised of a polyelectrolyte.

US-A-2007/0265372 teaches a method of preparing an ink including homogenizing a dispersion to coat pigment particles in the dispersion with a monomer. The ink includes pigment particles encapsulated in a polymerized monomer, where the monomer has a polarity that is higher than the polarity of the surface of the pigment particles.

EP-A-1 728 837 discloses a method for preparing a pigment dispersion comprising:
subjecting a mixture comprising at least a pigment, a dispersant and water to a first dispersion treatment using a media mill to prepare a first dispersion; and
then subjecting the first dispersion to a second dispersion treatment using a media-less mill to prepare the pigment dispersion,
wherein when the pigment is a pigment other than carbon black, the pigment in the pigment dispersion has an average particle diameter (D50) of from 20 to 130 nm, and a standard deviation of particle diameter of less than the average particle diameter (D50), and when the pigment is a carbon black, the pigment in the pigment dispersion has an average particle diameter (D50) of from 70 to 180 nm, and a standard deviation of particle diameter of not greater than one half of the average particle diameter (D50).

### SUMMARY OF THE INVENTION

However, the present inventors have found that not only is the aqueous dispersion for inkjet recording described in JP-A No. 2007-169506 sometimes insufficient in terms of the density of the black color, but in some instances, for example in a case in which finer particles are desired, it is difficult to stably maintain the dispersed particle diameter after the fine dispersion is formed.

Conventionally, in order to obtain a dispersion of fine particles of carbon black, carbon black having a small primary particle diameter and a small aggregate size has been favorably used, or carbon black, the surface of which has been subjected to oxidation treatment in order to increase dispersibility, has been blended with a variety of pigment dispersants, such as a water-soluble resin or a surfactant, and a pH adjuster and finely dispersed in an aqueous medium while imparting energy. However, while the carbon black can be finely dispersed to a certain extent, problems remain in that fine particles cannot be obtained, dispersion stability is insufficient, and coloring properties and clarity are inferior.

In recent years, high-density heads have been developed in conjunction with advances in formation of high-quality images, and it has become necessary to develop finer pigment (in particular, carbon black) dispersants; however, since it has been extremely difficult to improve dispersion stability while finely dispersing a pigment with small primary particles and high lipophilicity, further development of pigments in this kind of aqueous dispersion system is required.

The present invention was achieved in view of the above circumstances and aims to provide a method of manufacturing a pigment dispersion with favorable stability and an aqueous ink for inkjet recording having superior storage stability and ejection stability properties, together with a method of manufacturing the same.

According to a first aspect, the present invention provides a manufacturing method of a pigment dispersion comprising:
a first dispersion process that mixes and disperses a first water-insoluble resin, an organic solvent, pigment and water;
a second dispersion process that adds a second water-insoluble resin to a resulting dispersion of the first dispersion process and further disperses the dispersion; and
a removal process that removes at least a part of the organic solvent from a resulting aqueous dispersion of the second dispersion process, wherein
at least one of the first water-insoluble resin and the second water-insoluble resin comprises a structural unit represented by the following Formula (I): 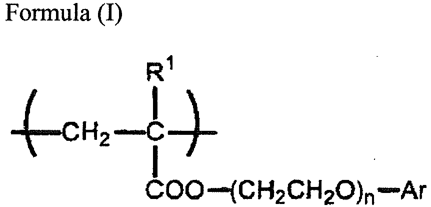
wherein R¹ represents a hydrogen atom or a methyl group; Ar represents a substituted or unsubstituted aromatic group; and n represents an average repeating number in a range of from 1 to 6.

Preferably, Ar in Formula (I) represents a group derived from a benzene ring, a naphthalene ring, a condensed aromatic ring having 8 or more carbon atoms, an aromatic ring condensed by a heterocycle, or two or more aromatic rings linked to each other.

Preferably the at least one of the first water-insoluble resin and the second water-insoluble resin further comprises at least one hydrophobic structural unit other than the structural unit represented by Formula (I).

Preferably the at least one hydrophobic structural unit is a structural unit derived from a vinyl monomer or a hydrophobic structural unit which has an aromatic ring linked, via a linking group, to an atom included in a main chain other than that of the structural unit represented by Formula (I). In this case, the vinyl monomer is preferably a (meth)acrylate, a (meth)acrylamide, a styrene or a vinyl ester, without a hydrophilic functional group. Alternatively, the hydrophobic structural unit which has an aromatic ring linked, via a linking group, to an atom included in a main chain other than that of the structural unit represented by Formula (I), is a structural unit represented by the following Formula (II) which excludes the structural unit represented by Formula (I): 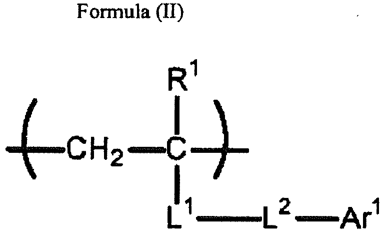 wherein R¹ represents a hydrogen atom, a methyl group, or a halogen atom; L¹ represents *-COO-, *-OCO-, *-CONR²-, *-O-, or a substituted or unsubstituted phenylene group; L² represents a single bond, an imino group (-NH-), a sulfamoyl group or a divalent linking group having 1 to 30 carbon atoms; Ar¹ represents a monovalent group derived from an aromatic ring; R² represents a hydrogen atom or an alkyl group having 1 to 10 carbon atoms; and the symbol * for L¹ represents a position linked to the main chain.

Preferably the first water-insoluble resin and the second water-insoluble resin are the same.

Preferably the mixing amount of the first water-insoluble resin is from 30% by mass to 50% by mass with respect to a mass of the pigment, and a mixing amount of the second water-insoluble resin is from 5% by mass to 20% by mass with respect to a mass of the pigment.

Preferably the pigment is a carbon black. Preferably the carbon black has an average primary particle diameter of 15 nm or less, and a pH in a range from acidic to neutral.

In a second aspect, the present invention provides a method for inkjet recording providing the steps of:
preparing a pigment dispersion by a manufacturing method in accordance with the above first aspect,
preparing an aqueous ink comprising the pigment dispersion, and
applying the aqueous ink to a recording medium by an inkjet method.

### Method of manufacturing pigment dispersion

The method of manufacturing a pigment dispersion of the present invention includes a process of obtaining an aqueous dispersion including a first dispersion process of mixing and dispersing at least one kind of a first water-insoluble resin, at least one kind of organic solvent, at least one kind of pigment and water and a second dispersion process of adding a second water-insoluble resin to the dispersion obtained in the first dispersion process and dispersing the second water-insoluble resin therein, and a process of removing at least a part of the organic solvent from the aqueous dispersion obtained by the second dispersion process.

The pigment dispersion of the present invention includes a pigment that is coated by the first and second water-insoluble resins and is dispersed in water. In the method of manufacturing a pigment dispersion of the present invention, it is possible to manufacture a pigment dispersion in which fine particles of a pigment are finely dispersed by not mixing in all of the water-insoluble resin at once and, rather, by adding a water-insoluble resin in a first dispersion process and then adding a second water-insoluble resin in a second dispersion process, dividing the addition process into separate installments.

### Water-insoluble resin

In the method of manufacturing a pigment dispersion of the present invention, at least one kind of water-insoluble resin is used and the first water-insoluble resin used in the first dispersion process may be the same as or different from the second water-insoluble resin used in the second dispersion process; however, it is preferable to use the same water-insoluble resin.

By using the same water-insoluble resin as both the first and second water-insoluble resin, it is possible to disperse the pigment more finely in the pigment dispersion and achieve a pigment dispersion having superior dispersion stability. Further, an ink for inkjet recording that includes the pigment dispersion will have superior storage stability and ejection stability properties.

In the following, unless indicated otherwise, the term "water-insoluble resin" is used to refer to both the first and second water-insoluble resins.

### <Water-insoluble Resin>

At least one of the water-insoluble resin and the second water-insoluble resin comprises a structural unit represented by the following Formula (I): 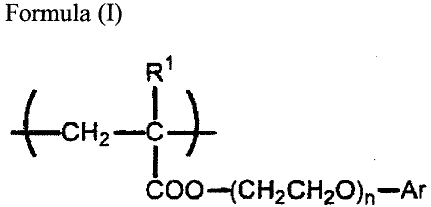 wherein R¹ represents a hydrogen atom or a methyl group; Ar represents a substituted or unsubstituted aromatic group; and n represents an average repeating number in a range of from 1 to 6.

The water-insoluble resin used in the invention is otherwise not particularly limited as long as it is a resin that can be dissolved in an organic solvent so that at least a part of pigment can be coated and the coated pigment can be dispersed in water. Examples of the water-insoluble resin include a nonionic polymer compound which is copolymers of monomers having an ethylenically unsaturated group, an anionic polymer compound which is copolymers of monomers having an ethylenically unsaturated group, a cationic polymer compound which is copolymers of monomers having an ethylenically unsaturated group, and an amphoteric polymer compound which is copolymers of monomers having an ethylenically unsaturated group.

The water-insoluble resin in the invention is preferably a resin including a hydrophilic structural unit and a hydrophobic structural unit, from the viewpoint of its ability to be stably present in water, to reduce the adhesion or deposition of aggregates, and to remove adhered aggregates easily

In formula (I), R¹ is preferably a methyl group.

In formula (I), Ar represents an unsubstituted or a substituted aromatic group. When the aromatic ring is substituted, examples of a substituent include, a halogen atom, an alkyl group, an alkoxy group, a hydroxy group, a cyano group and the like, and it may form a condensed ring. When a condensed ring is formed, examples thereof include a condensed aromatic ring having 8 or more carbon atoms, an aromatic ring in which a heterocycle is condensed, and two or more aromatic rings connected to each other.

The "condensed aromatic ring having 8 or more carbon atoms" may be an aromatic ring in which at least two or more benzene rings are condensed, or an aromatic compound having 8 or more carbon atoms including at least one aromatic ring and an alicyclic hydrocarbon condensed by an aromatic ring. Specific examples include naphthalene, anthracene, fluorene, phenanthrene, acenaphthene and the like.

The "aromatic ring in which a heterocycle is condensed" may be an aromatic ring wherein an aromatic compound which does not include any hetero atom (preferably a benzene ring) and a cyclic compound which includes a hetero atom is condensed with each other. Herein, the cyclic compound which includes a hetero atom is preferably 5- or 6-membered cyclic compound. As a hetero atom, a nitrogen atom, an oxygen atom or a sulfur atom is preferred. The cyclic compound which includes a hetero atom may include a plurality of hetero atoms. In this case, the hetero atoms may be the same or different from each other. Specific examples of an aromatic ring in which a heterocycle is condensed include phthalimide, acridone, carbazole, benzoxazole, benzothiazole and the like.

The group derived from an aromatic ring, represented by "Ar" is linked to the main chain of the water-insoluble resin via an ester group and an ethyleneoxide chain. Since the aromatic ring is not directly linked to the main chain, an appropriate distance is maintained between the hydrophobic aromatic ring and the hydrophilic structural unit. Therefore, an interaction between the water-insoluble resin and the pigment can easily occur, so that the resin is strongly adsorbed to the pigment, and the dispersibility can be improved.

Preferred examples of Ar include a group derived from an unsubstituted benzene ring or an unsubstituted naphthalene ring. Particularly preferred is a group derived from an unsubstituted benzene ring.

The symbol "n" represents an average repeating number, that is an average of the repeating number of the unit "-CH₂CH₂O-" in the ethyleneoxy chains contained in the water-insoluble resin. The symbol "n" is in the range of from 1 to 6, preferably in the range of from 1 to 2.

Specific examples of a monomer which forms a structural unit represented by the formula (I) include phenoxyethyl (meth)acrylate and the like, and the following monomers. The present invention is not limited to the following specific examples.

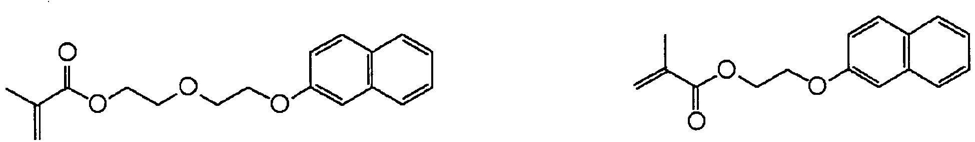

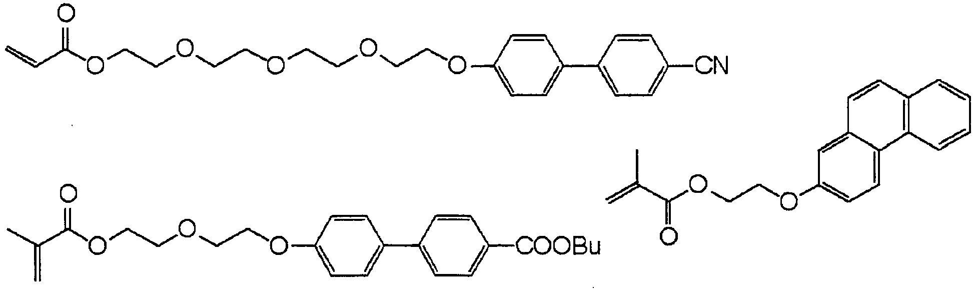

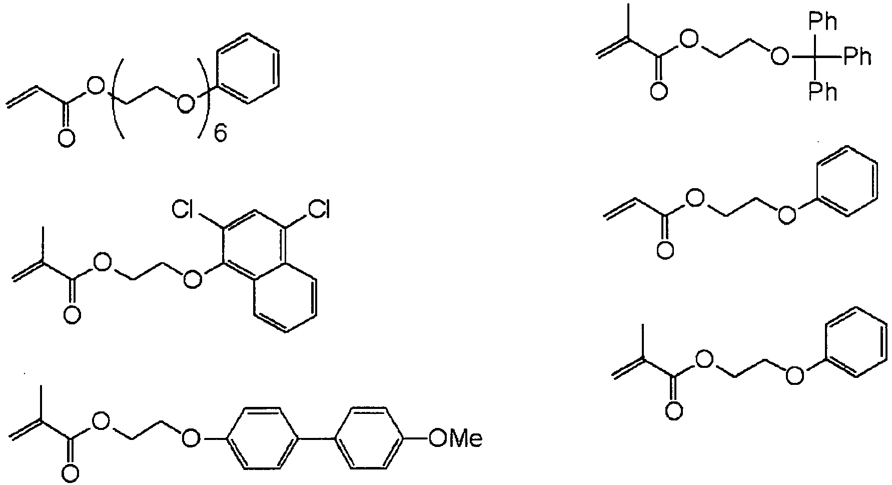

As the structural unit represented by the formula (I), in terms of dispersion stability, a structural unit in which R¹ is a methyl group, Ar is a group derived from an unsubstituted benzene ring and n is in the range of from 1 to 2, is particularly preferred.

The content of a structural unit represented by the formula (I) is preferably from 30% by mass to 70% by mass, and more preferably from 40% by mass to 50% by mass in the water-insoluble resin based on the total mass of the water-insoluble resin. When the content is 30% by mass or more, excellent dispersibility can be obtained. When it is 70% by mass or less, the adhesion and deposition of the aggregate can be inhibited, and the removability of the adhered aggregate (i.e., maintainability) is excellent, so that an image problem such as white spots can be prevented.

The water-insoluble resin of the invention may further include at least one hydrophobic structural unit (another hydrophobic structural unit), in addition to the structural unit represented by the formula (I).

Examples of another hydrophobic structural unit include a structural unit that does not belong to the hydrophilic structural unit (i.e., having no hydrophilic functional group) such as a structural unit derived from a vinyl monomer such as (meth)acrylates, (meth)acrylamides, styrenes, and vinyl esters, and a hydrophobic structural unit which has an aromatic ring linked, via a linking group, to an atom included in a main chain. These structural units can be used alone or in combination of two or more.

Examples of the (meth)acrylates include methyl(meth)acrylate, ethyl(meth)acrylate, butyl(meth)acrylate, isobutyl(meth)acrylate, hexyl(meth)acrylate and the like. Among these, methyl(meth)acrylate, ethyl(meth)acrylate and butyl(meth)acrylate are preferred. Methyl(meth)acrylate and ethyl(meth)acrylate are particularly preferred.

Examples of the (meth)acrylamides include (meth)acrylamides such as N-cyclohexyl(meth)acrylamide, N-(2-methoxyethyl)(meth)acrylamide, N,N-diallyl(meth)acrylamide, or N-allyl(meth)acrylamide.

Examples of the styrenes include styrene, methylstyrene, dimethylstyrene, trimethylstyrene, ethylstyrene, isopropylstyrene, n-butylstyrene, tert-butylstyrene, methoxystyrene, butoxystyrene, acetoxystyrene, chlorostyrene, dichlorostyrene, bromostyrene, chloromethylstyrene, hydroxystyrene which is protected by a group removable with an acidic compound (for example, t-Boc and the like), methyl vinylbenzoate, α-methylstyrene, vinyl naphthalene and the like. Among these, styrene and α-methylstyrene are preferred.

Examples of the vinyl esters include vinyl esters such as vinyl acetate, vinyl chloroacetate, vinyl propionate, vinyl butyrate, vinyl methoxyacetate or vinyl benzoate. Among these, vinyl acetate is preferred.

"(Meth)acrylate" means acrylate or methacrylate, "(meth)acrylamide" means acrylamide or methacrylamide, and "(meth)acrylic" means acrylic or methacrylic.

In the "hydrophobic structural unit which has an aromatic ring linked, via a linking group, to an atom included in a main chain", the aromatic ring is linked, via a linking group, to the atom included in the main chain of the water-insoluble resin and thus not directly linked to the atom included in the main chain of the water-insoluble resin. As result, an appropriate distance is maintained between the hydrophobic aromatic ring and the hydrophilic structural unit, and therefore an interaction between the water-insoluble resin and the pigment can easily occur, and the resin is strongly adsorbed to the pigment, so that the dispersibility can be further improved.

The "hydrophobic structural unit which has an aromatic ring linked to an atom included in the main chain via a linking group" may be a structural unit represented by the formula (II) described below (in which the structural unit represented by the formula (I) is not included).

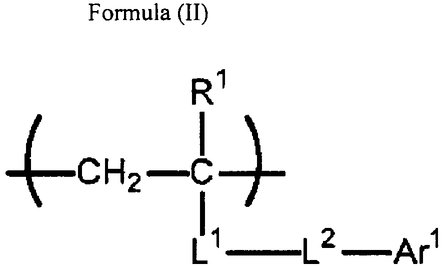

In formula (II), R¹ represents a hydrogen atom, a methyl group, or a halogen atom.

L¹ represents *-COO-, *-OCO-, *-CONR²-, *-O-, or a substituted or unsubstituted phenylene group, R² represents a hydrogen atom, or an alkyl group having 1 to 10 carbon atoms. The symbol "*" for L¹ represents a position linked to the main chain. When the phenylene group is substituted, examples of a substituent include a halogen atom, an alkyl group, an alkoxy group, a hydroxy group and a cyano group, but not limited thereto.

L² represents a single bond, an imino group (-NH-), a sulfamoyl group or a divalent linking group having 1 to 30 carbon atoms, and when it is a divalent linking group, it is preferably a linking group having 1 to 25 carbon atoms, more preferably a linking group having 1 to 20 carbon atoms, and still more preferably a linking group having 1 to 15 carbon atoms.

Among these, particularly preferred are an alkyleneoxy group having 1 to 25 carbon atoms (more preferably 1 to 10 carbon atoms), an imino group (-NH-), a sulfamoyl group, and a divalent linking group which includes an alkylene group such as an alkylene group having 1 to 20 carbon atoms (more preferably 1 to 15 carbon atoms) or an ethylene oxide group [-(CH₂CH₂O)ₙ-, wherein n is 1 to 6], and a group in which two or more of these groups are combined.

In the formula (II), Ar¹ represents a monovalent group derived from an aromatic ring.

The aromatic ring which derives a group represented by Ar¹ is not specifically limited. Examples of the aromatic ring represented by Ar¹ include a benzene ring, a condensed aromatic ring having 8 or more carbon atoms, an aromatic ring in which a heterocycle is condensed, and two or more benzene rings that are connected to each other. Detailed information regarding the condensed aromatic ring having 8 or more carbon atoms and the aromatic ring in which a heterocycle is condensed is the same as described above.

Herein below, specific examples of a monomer which can form the hydrophobic structural unit which has an aromatic ring linked, via a linking group, to an atom included in a main chain are given. However, according to the invention, it is not limited to the following specific examples.

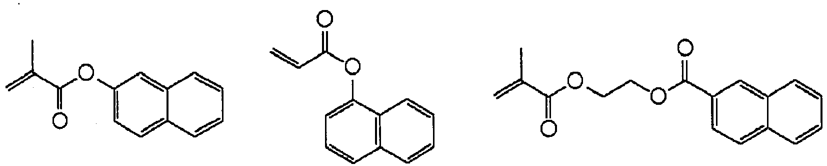

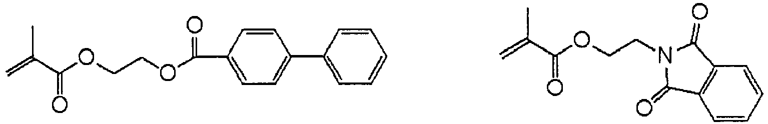

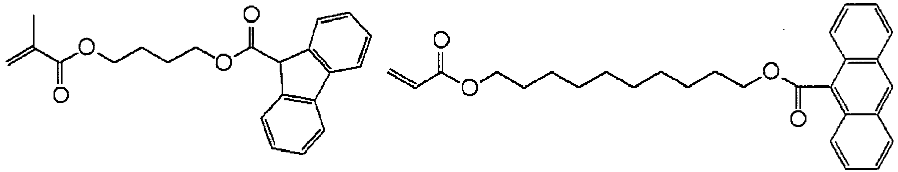

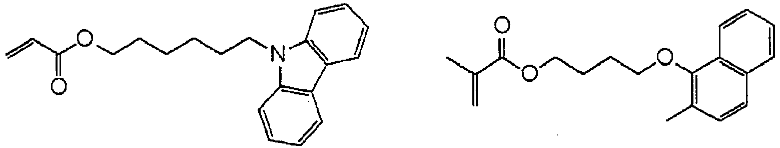

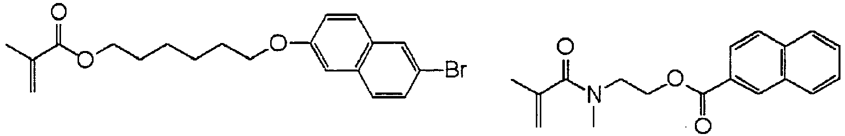

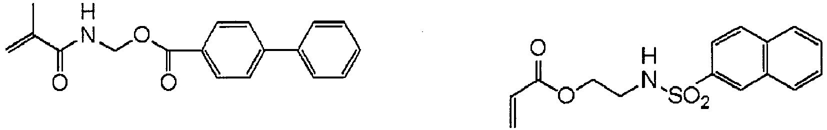

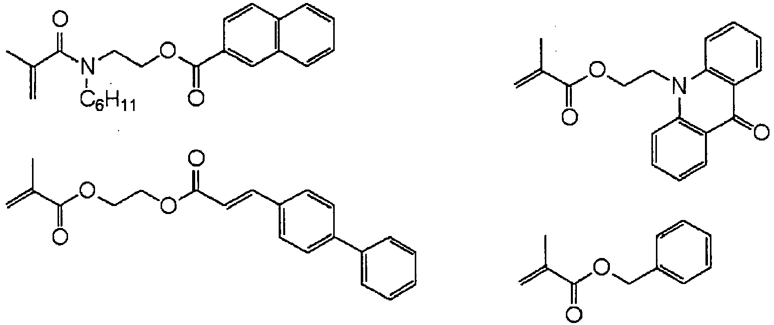

The hydrophilic structural unit in the water-insoluble resin which may be included in the water-soluble resin is not specifically limited as long as it is a structural unit derived from a monomer containing a hydrophilic group. The hydrophilic group may be any one of an anionic group, a cationic group or a non-ionic group. In the present invention, the water-insoluble resin preferably includes at least one structural unit containing an anionic hydrophilic group as a hydrophilic structural unit, from the viewpoint of dispersibility. The water-insoluble resin preferably includes a structural unit derived from at least one of acrylic acid or methacrylic acid as the hydrophilic structural unit.

In the present invention, the water-insoluble resin preferably includes a structural unit derived from at least one of acrylic acid or methacrylic acid, and the water-insoluble resin may includes another hydrophilic structural unit. Examples of another hydrophilic structural unit include a structural unit derived from a monomer containing a non-ionic hydrophilic group or a cationic hydrophilic group.

Examples of the non-ionic or cationic "hydrophilic functional group" include a hydroxy group, an amino group, an amide group (nitrogen atom is unsubstituted) and alkylene oxides such as polyethylene oxide or polypropylene oxide as described below.

Examples of the monomer containing a non-ionic or cationic hydrophilic group include a structural unit derived from a vinyl monomer such as a (meth)acrylate containing a non-ionic or cationic hydrophilic functional group, a (meth)acrylamide containing a non-ionic or cationic hydrophilic functional group and a vinyl ester containing a non-ionic or cationic hydrophilic functional group.

The monomer which forms a hydrophilic structural unit having a non-ionic or cationic hydrophilic group is not specifically limited as long as it includes a functional group such as an ethylenic unsaturated bond which can form a polymer and a non-ionic or cationic hydrophilic functional group, and it can be selected from known monomers. Specific examples thereof preferably include hydroxyethyl (meth)acrylate, hydroxybutyl (meth)acrylate, (meth)acrylamide, aminoethyl acrylate, aminopropyl acrylate, and (meth)acrylate which includes an alkylene oxide polymer.

The hydrophilic structural unit which includes a non-ionic or cationic hydrophilic group can be formed by polymerization of a corresponding monomer. Alternatively, hydrophilic functional groups may be introduced to the polymer chain after polymerization.

As a hydrophilic structural unit which includes a non-ionic hydrophilic group, a hydrophilic structural unit including an alkylene oxide structure is more preferred. As the alkylene moiety in an alkylene oxide structure, an alkylene moiety having 1 to 6 carbon atoms is preferred, an alkylene moiety having 2 to 6 carbon atoms is more preferred, and an alkylene moiety having 2 to 4 carbon atoms is even more preferred, in terms of hydrophilicity. In addition, the polymerization degree of the alkylene oxide structure is preferably 1 to 120, more preferably 1 to 60 and even more preferably 1 to 30.

In addition, as a hydrophilic structural unit which includes a non-ionic hydrophilic group, a hydrophilic structural unit including a hydroxy group is also preferred. With respect to the number of a hydroxy group included in a structural unit, in terms of hydrophilicity of the water-insoluble resin and compatibility with other monomers and solvent used during polymerization, it is preferably 1 to 4, more preferably 1 to 3, and even more preferably 1 to 2, but not specifically limited thereto.

When the water-insoluble resin includes the hydrophilic structural unit, the content of the hydrophilic structural unit in the water-insoluble resin of the invention may vary depending on the ratio of the hydrophobic structural unit. For example, when the water-insoluble resin consists of acrylic acid and/or methacrylic acid [hydrophilic structural unit] and the hydrophobic structural unit, the content of acrylic acid and/or methacrylic acid is calculated by "100 - (% by mass of the hydrophobic structural unit)".

A single type of the hydrophilic structural unit can be used, or a combination of two or more types thereof can be used.

In the water-insoluble resin of the invention, although the composition ratio of the hydrophilic structural unit and hydrophobic structural unit (including the structural unit represented by the formula (I)) varies depending on hydrophilicity and hydrophobicity of each units, it is preferred that the content of the hydrophilic structural unit is 15% by mass or less. In this case, the content of the hydrophobic structural unit is preferably more than 80% by mass, and more preferably 85% by mass or more with respect to the total mass of the water-insoluble resin.

When the hydrophilic structural unit is included in an amount of 15% by mass or less, the amount of the component that is dissolved by itself in water can be reduced, and various properties including dispersibility of the pigment can be improved. As a result, when inkjet recording is carried out, a favorable ink discharge property can be obtained.

The content of the hydrophilic structural unit is preferably in the range of from more than 0% by mass to 15% by mass, more preferably in the range of from 2% by mass to 15% by mass, still more preferably in the range of from 5% by mass to 15% by mass, and even still more preferably in the range of from 8% by mass to 12% by mass with respect to the total mass of the water-insoluble resin.

The content of aromatic rings included in the water-insoluble resin is preferably 27% by mass or less, more preferably 25% by mass or less, and even more preferably 20% by mass or less with respect to the total mass of the water-insoluble resin. Among these, the range of from 15% by mass to 20% by mass is preferrable and the range of from 17% by mass to 20% by mass is more preferrable. When the content of aromatic rings falls within the above range, resistance to scrubbing is improved.

The acid number of the water-insoluble resin of the invention is preferably 30mg KOH/g or more but 100mg KOH/g or less, in terms of dispersibility of the pigment and storage stability. More preferably, it is 30mg KOH/g or more but 85mg KOH/g or less. Even more preferably, it is 50mg KOH/g or more but 85mg KOH/g or less.

The acid number is defined as the mass (mg) of KOH that is required for complete neutralization of 1 g of the water-insoluble resin and is measured by the method according to JIS Standard (JIS K0070, 1992), the disclosure of which is incorporated by reference herein.

The weight average molecular weight (Mw) of the water-insoluble resin of the invention is preferably 30,000 or more, more preferably 30,000 to 150,000, still more preferably 30,000 to 100,000 and even still more preferably 30,000 to 80,000. In the case of the molecular weight of 30,000 or more, a steric repulsive effect for a dispersion agent tends to be improved, and due to such a steric effect, adsorption onto pigment can be improved.

In addition, the number average molecular weight (Mn) is preferably in the range of from 1,000 to 100,000, and more preferably in the range of from 3,000 to 50,000. When the number average molecular weight falls within the above range, function of the resin as a coating layer on the pigment or coating layer of an ink composition can be obtained. According to the invention, the water-insoluble resin is preferably used in a form of salt of an alkaline metal or an organic amine.

In addition, the molecular weight distribution of the water-insoluble resin of the invention (weight average molecular weight/number average molecular weight) is preferably in the range of from 1 to 6, and more preferably in the range of from 1 to 4. When the molecular weight distribution falls within the above range, dispersion stability and discharge stability of ink can be improved.

The number average molecular weight and weight average molecular weight are measured by gel permeation chromatography (GPC). As a GPC instrument, HLC-8020GPC (trade name, manufactured by Tosoh Corp.) is used, and three columns of TSKGEL, SUPER MULTIPORE HZ-H (trade name, manufactured by Tosoh Corp., 4.6mmID x 15cm) were used. The detection was carried out using THF (tetrahydrofuran) as an eluent, and the molecular weight is calculated by a conversion with a polystyrene as a standard material. As a measurement condition, sample concentration is 0.35% by mass, flow rate is 0.35 mL/min, sample injection amount is 10 µL, and measurement temperature is 40°C, and an RI detector is used for detection. In addition, the calibration curve is established by using eight samples of "STANDARD SAMPLE TSK STANDARD, POLYSTYRENE": F-40, F-20, F-4, F-1, A-5000, A-2500, A-1000 (trade name, all manufactured by Tosoh Corp.) and n-propylbenzene.

The water-insoluble resin of the invention can be polymerized according to various polymerization methods such as solution polymerization, precipitation polymerization, suspension polymerization, precipitation polymerization, bulk polymerization, or emulsion polymerization. The polymerization reaction can be carried out according to a known operational process such as a batch process, a semi-continuous process, a continuous process and the like. Examples of the method for initiating polymerization include a method using a radical initiator, a method using light or radiation and the like. These methods for polymerization and method for initiating polymerization are described in literatures; for example "Method for polymer synthesis" (revised edition, Tsuruta Teiji, 1971, Nikkan Kogyo Shimbun) or "Experimental method for polymer synthesis" (Otsu Takayuki and Kishita Masayoshi, 1972, Kagaku Dojin, pp 124-154).

Among the polymerization methods, a solution polymerization using a radical initiator is particularly preferred. Examples of a solvent which can be used for a solution polymerization include various organic solvents such as ethyl acetate, butyl acetate, acetone, methylethyl ketone, methylisobutyl ketone, cyclohexanone, tetrahydrofuran, dioxan, N,N-dimethylformamide, N,N-dimethylacetamide, benzene, toluene, acetonitrile, methylene chloride, chloroform, dichloroethane, methanol, ethanol, 1-propanol, 2-propanol, or 1-butanol. The solvent may be used alone or in combination of two or more. In addition, it can be used as a mixed solvent with water. It is necessary to set the temperature for polymerization considering molecular weight of a polymer to be produced, and types of an initiator and the like. In general, it is approximately 0°C to 100°C. Preferably, the polymerization is carried out under the temperature range of from 50°C to 100°C. The reaction pressure can be appropriately selected and it is generally 1 kg/cm² to 100 kg/cm², and more preferred is 1 kg/cm² to 30 kg/cm². The reaction time may be approximately 5 hours to 30 hours. The resin produced may be further purified by re-precipitation and the like.

Herein below, specific examples of a preferred water-insoluble resin of the invention are described. However, it is not limited thereto in the invention. Meanwhile, the values described at the bottom right side of the parentheses for B-11 - B-13 indicate mass percentage (% by mass). 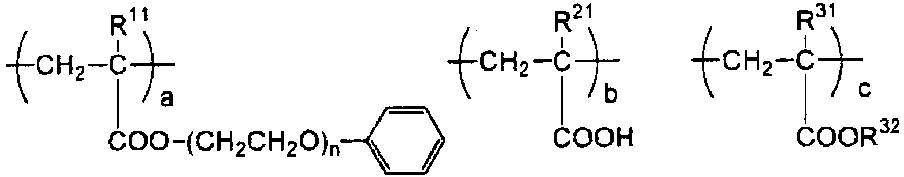 (a, b and c represent the respective composition ratios (% by mass))

| | R¹¹ | n | R²¹ | R³¹ | R³² | a | b | c | Mw |
|---|---|---|---|---|---|---|---|---|---|
| B-1 | CH₃ | 1 | CH₃ | CH₃ | CH₃ | 60 | 9 | 31 | 35500 |
| B-2 | H | 1 | H | H | CH₂CH₃ | 69 | 10 | 21 | 41200 |
| B-3 | CH₃ | 2 | CH₃ | CH₃ | CH₃ | 70 | 11 | 19 | 68000 |
| B-4 | CH₃ | 4 | CH₃ | CH₃ | CH(CH₃)CH₃ | 70 | 7 | 23 | 72000 |
| B-5 | H | 5 | H | H | CH₃ | 70 | 10 | 20 | 86000 |
| B-6 | H | 5 | H | H | CH₂CH(CH₃)CH₃ | 70 | 2 | 28 | 42000 |
| B-7 | CH₃ | 1 | CH₃ | CH₃ | CH₂CH₃ | 50 | 11 | 39 | 44500 |
| B-8 | CH₃ | 1 | CH₃ | CH₃ | CH₂CH₃ | 50 | 10 | 40 | 51200 |
| B-9 | H | 1 | H | H | CH₂CH₃ | 45 | 11 | 44 | 48900 |
| B-10 | H | 1 | CH₃ | CH₃ | CH₂CH₃ | 45 | 12 | 43 | 43600 |

| | | **Mw** |
|---|---|---|
| **B**-**11** | 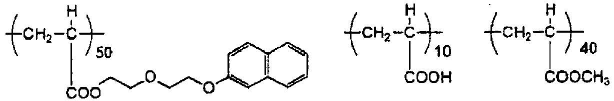 | **72400** |
| **B**-**12** | 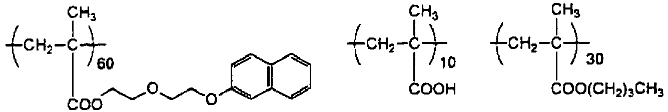 | **33800** |
| **B**-**13** | 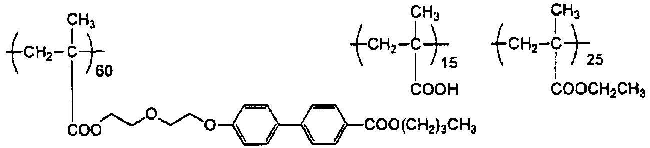 | **39200** |

The relative content of pigment to that of the water-insoluble resin of the present invention (the total mass of water-insoluble resin used in both the first and second dispersion processes) is, by mass ratio (pigment:resin), preferably from 100:25 to 100:140 and more preferably from 100:25 to 100:50. When the relative content is at least 100:25, improvements in dispersion stability and scratch resistance are obtained and when the relative content is no more than 100:140 improvements in dispersion stability are obtained.

In the method of manufacturing a pigment dispersion of the present invention, the amount of water-insoluble resin used in the first and second dispersion processes is not particularly limited; however, in a preferable embodiment, from 25% by mass to 75% by mass of the first water-insoluble resin is used relative to the amount of pigment and from 3% by mass to 40% by mass of the second water-insoluble resin is used relative to the amount of pigment.

When at least 25% by mass of the first water-insoluble resin is used, it is possible to suppress aggregation of the dispersion, and when no more than 75% by mass is used, it is possible to increase the speed of dispersion and to suppress excessive dispersion.

Further, when at least 3% by mass of the second water-insoluble resin is used, it is possible to reduce the cumulative 90% particle diameter (D90), and when no more than 40% by mass is used, it is possible to increase the speed of dispersion and to narrow the particle size distribution.

Within these ranges, with respect to the combined amounts of the first and second water-insoluble resin used, in a more preferable embodiment, from 30% by mass to 70% by mass of the first water-insoluble resin is used relative to the amount of pigment and from 5% by mass to 30% by mass of the second water-insoluble resin is used relative to the amount of pigment and, in a particularly preferable embodiment, from 35% by mass to 50% by mass of the first water-insoluble resin is used relative to the amount of pigment and from 10% by mass to 25% by mass of the second water-insoluble resin is used relative to the amount of pigment.

### Pigment

In the method of manufacturing a pigment dispersion of the present invention, at least one kind of pigment is used.

Known pigments and the like can be used without any particular limitation. Among these, in view of ink coloring properties, pigments that hardly dissolve at all, or dissolve only sparingly, in water are preferable.

Both organic pigments and inorganic pigments, for example, may be used.

Examples of organic pigments include azo pigments, polycyclic pigments, dye chelates, nitro pigments, nitroso pigments and aniline black. Among these, azo pigments, polycyclic pigments and the like are more preferable.

For example, examples of azo pigments include azo lake, insoluble azo pigments, condensed azo pigments and chelate azo pigments. Examples of polycyclic pigments include phthalocyanine pigments, perylene pigments, perynone pigments, anthraquinone pigments, quinacridone pigments, dioxazine pigments, indigo pigments, thioindigo pigments, isoindolinone pigments and quinophthalone pigments. Examples of dye chelates include basic dye chelates and acidic dye chelates.

Examples of inorganic pigments include titanium oxide, iron oxide, calcium carbonate, barium sulphate, aluminum hydroxide, barium yellow, cadmium red, chrome yellow and carbon black.

Among these pigments, carbon black is particularly preferable because the effects of the present invention of pigment refinement and storage stability are exhibited to a remarkable degree.

The carbon black is not particularly limited but, in view of pigment refinement and storage stability, carbon black having an average primary particle diameter of 15 nm or less, for which, in particular, pigment refinement and storage stability are difficult, and having a pH value in the acidic to neutral regions is more preferable.

Carbon black having an average primary particle diameter and a pH value in these ranges has a relatively small particle diameter and, when, for example, a pigment dispersion manufactured according to the method of manufacture of the present invention is applied to an aqueous ink, high printing density is obtained and, by including the carbon black coated with the water-insoluble resin of the present invention as described in the foregoing, dispersion stability after dispersion is maintained and a black ink is obtained that has stable ink ejection properties.

The average primary particle diameter of the carbon black is preferably from 10 nm to 50 nm and, more preferably, from 10 nm to 20 nm.

By ensuring that the average primary particle diameter of the carbon black is 15 nm or less, the volume-average particle diameter of the dispersion can be stably reduced and ejection stability properties further improved.

The average primary particle diameter of the carbon black is calculated according to the following method.

The average primary particle diameter is measured by dripping a powder that has been wetted with a liquid onto a carbon support film and, after drying, calculating from the diameters and number of particles in an image captured using a TEM2010 (trade name, manufactured by JEOL Ltd.; acceleration voltage: 200kV).

Ensuring that the pH value of the carbon black is in the acidic to neutral regions is preferable because ease of dispersibility is obtained thereby, and the pH is more preferably from pH 2.0 to pH 8.5 and particularly preferably from pH 2.5 to pH 8.0.

Examples of carbon black include those produced by known methods such as a contact method, a furnace method, or a thermal method.

Specific examples of carbon black used in the invention include RAVEN7000, RAVEN5750, RAVEN5250, RAVEN5000 ULTRAII, RAVEN3500, RAVEN2000, RAVEN 1500, RAVEN1250, RAVEN1200, RAVEN1190 ULTRAII, RAVEN1170, RAVEN1255, RAVEN 1080, RAVEN 1060, RAVEN700 (trade name, all manufactured by Colombian Carbon Corp.), REGAL400R, REGAL330R, REGAL660R, MOGUL L, BLACK PEARLS L, MONARCH700, MONARCH800, MONARCH880, MONARCH900, MONARCH1000, MONARCH1100, MONARCH1300, MONARCH1400 (trade name, all manufactured by Cabot Corp.), COLOR BLACK FW1, COLOR BLACK FW2, COLOR BLACK FW2V, COLOR BLACK 18, COLOR BLACK FW200, COLOR BLACK S150, COLOR BLACK S160, COLOR BLACK S170, PRINTEX 35, PRINTEX U, PRINTEX V, PRINTEX 140U, PRINTEX 140V, SPECIAL BLACK 6, SPECIAL BLACK 5, SPECIAL BLACK 4A, SPECIAL BLACK 4, NIPEX180-IQ, NIPEX170-IQ (trade name, all manufactured by Evonik Degussa Co., Ltd), and No.25, No.33, No.40, No.45, No.47, No.52, No.900, No.2200B, No.2300, No.990, No.980, No.970, No.960, No.950, No.850, MCF-88, MA600, MA7, MA8, MA100 (trade name, all manufactured by Mitsubishi Chemical Corp.) and the like, but not limited thereto.

The pigment can be used alone or in a combination of two or more selected from a same type or different types.

### <Organic Solvent>

Preferable examples of the organic solvent used in the invention include alcohol solvents, ketone solvents and ether solvents. Examples of the alcohol solvent include isopropyl alcohol, n-butanol, t-butanol, and ethanol. Examples of the ketone solvent include acetone, methyl ethyl ketone, diethyl ketone, and methyl isobutyl ketone. Examples of the ether solvent include dibutyl ether, and dioxane. Among these solvents, a ketone solvent such as methyl ethyl ketone and an alcohol solvent such as isopropyl alcohol are preferrable. Methyl ethyl ketone is more preferrable.

### <Neutralizing Agent>

The neutralizing agent is used to neutralize a part of or the whole dissociating group when the water-insoluble resin has a dissociable group and to form a stabily emulsified or a stably dispersed state in which the water-insoluble resin is stably dispersed in water.

Examples of the neutralizing agent include alcohol amines (for example, diethanol amine, triethanol amine, 2-amino-2-ethyl-1,3-propane diol and the like), hydroxides of an alkali metal (for example, lithium hydroxide, sodium hydroxide, potassium hydroxide and the like), ammonium hydroxides (for example, ammonium hydroxide and quaternary ammonium hydroxide), phosphonium hydroxides, alkali metal carbonates and the like. Among these, sodium hydroxide and potassium hydroxide are preferably used.

The method for manufacturing a pigment dispersion of the invention includes a first dispersion step of mixing a first water-insoluble resin, an organic solvent, pigment and water, and dispersing to form an aqueous dispersion; a second dispersion step of adding a second water-insoluble resin into the pigment dispersion obtained by the first dispersion step and dispersing further the aqueous dispersion; and a step of removing at least a part of the organic solvent from the aqueous dispersion obtained by the second dispersion step. The method may further include additional step(s), as necessary.

The method for manufacturing a pigment dispersion of the invention is basically a method called as a phase inversion emulsification method. The phase inversion emulsification method is a self-dispersing (phase inversion emulsification) method which includes dispersing a mixed molten material including a resin having self-dispersing ability or solubility and a pigment in water. In addition, the mixed molten material may include a hardening agent or a polymer compound. The mixed molten material may be in a state of being not dissolved but mixed, a state of being dissolved and mixed, or a state including both of the two states. More specific examples of the "phase inversion emulsification method" include those described in JP-A No. 10-140065.

In general, in the phase inversion emulsification method, since the resin functions as a dispersant, a dispersant other than the resin is not necessary. However, in the invention, other dispersant(s) other than the resin dispersant may be used as long as an advantage of the invention is not impaired.

In greater detail, the method of manufacturing a pigment dispersion of the present invention preferably includes, for example:
(1) mixing a first water-insoluble resin, an organic solvent, water and, preferably, a basic compound (neutralizing agent);
(2) mixing a pigment into the obtained mixed solution to provide a suspension and then dispersing the pigment using a disperser or the like to obtain an aqueous dispersion (first dispersion process);
(3) mixing a second water-insoluble resin into the obtained dispersion to provide a suspension and then dispersing the pigment using a disperser or the like to obtain an aqueous dispersion (second dispersion process); and
(4) removing the organic solvent by, for example, distillation to provide an aqueous dispersion in which the pigment is coated with water-insoluble resin and dispersed in water (removal process).

The first and second water-insoluble resins described in (1) and (3) above may be used as a solution dissolved in an organic solvent.

Further, the organic solvent described in (1) above and used in the first dispersion process may be the same as or different from the organic solvent used in the second dispersion process described in (3) above, and is preferably the same in terms of obtaining a fine emulsion by phase-inversion emulsification.

In the second dispersion process, a second water-insoluble resin is added to the aqueous dispersion obtained by the first dispersion process, and the second water-insoluble resin may be added all at once or little by little over time. Addition of the water-insoluble resin may be performed in a substantially similar manner whether as a solid or as dissolved in a solvent.

In the second dispersion process of (3) above, a second water-insoluble resin is added to the dispersion obtained by the first dispersion process and, in a preferable embodiment, the second water-insoluble resin is added at a time when the rate of reduction (rate of change) of particle diameter of the pigment dispersion particles being dispersed and refined in the first dispersion process has decreased to low rate.

The particle size of the pigment dispersion particles is not particularly limited, but is preferably from 100 nm to 120 nm.

By performing the above (4) remove step removing at least a part of the organic solvent, the phase inversion emulsification method is completed. Dispersion stability of the pigment dispersion is improved by performing the remove step.

In addition, more specifically, those disclosed in JP-A Nos. 11-209672 and 11-172180 can be referenced.

The mixing method and the dispersing method are not specifically limited. A commonly used mixing and stirring device may be used. A disperser such as an ultrasonic disperser, a high pressure homogenizer, a ball mill, a roll mill, a bead mill, a high speed stirring type disperser, or the like may be used as necessary.

### b) Acid precipitation method

In the step of removing at least a part the solvent from the obtained aqueous dispersion, a method for removing an organic solvent by a common method such as a reduced pressure distillation method, or the like may be used without specific limitation. In this step, a part of water may also be removed in addition to a part of the organic solvent.

By removing the organic solvent and converting the dispersion into an aqueous system, a dispersion of the resin-coated carbon black particles wherein the surface of the carbon black particles is coated with the water-insoluble resin can be obtained. In the dispersion obtained accordingly, it is preferable that the organic solvent is substantially removed and the amount of the organic solvent included is preferably 0.2% by mass or less, and more preferably 0.1% by mass or less.

### [Aqueous Ink for Inkjet Recording]

The aqueous ink for inkjet recording of the invention (herein below, sometimes referred to as "aqueous ink") includes at least one pigment dispersion described above, and as necessary, may further include an water-soluble solvent, a surfactant, and other components such as a preservative and a fungicide.

Having such a configuration, the aqueous ink for inkjet recording of the invention may be excellent in storage stability and recovery performance (ease of maintenance) of ink ejection property when starting after once stopped inkjetting.

The content of the pigment dispersion in the aqueous ink for inkjet recording of the invention is, in terms of the content of pigment coated with the water-insoluble resin, preferably from 1% by mass to 10% by mass, more preferably from 2% by mass to 8% by mass and even more preferably from 2% by mass to 6% by mass, from the viewpoints of the dispersion stability of the aqueous ink and the image recording density.

Examples of the resin particles include particles of an acrylic resin, a vinyl acetate resin, a styrene-butadiene resin, a vinyl chloride resin, an acryl-styrene resin, a butadiene resin, a styrene resin, a cross linked acrylic resin, a cross linked styrene resin, a benzoguanamaine resin, a phenol resin, a silicone resin, an epoxy resin, a urethane resin, a paraffinic resin, or a fluorine-based resin or a polymer latex including them.

An acrylic resin, an acryl-styrene resin, a styrene resin, a cross linked acrylic resin, and a cross linked styrene resin can be mentioned as a preferred example.

The weight average molecular weight of the resin particles is preferably 10,000 or more but 200,000 or less. More preferably, it is 100,000 or more but 200,000 or less.

The average particle diameter of the resin particles is preferably in the range of from 10 nm to 1 µm. More preferably, it is in the range of from 10 nm to 200 nm. Still more preferably, it is in the range of from 20 nm to 100 nm. Particularly more preferably, it is in the range of from 20 nm to 50 nm.

The addition amount of the resin particles is preferably from 0.5% by mass to 20% by mass with respect to the ink. More preferably, it is from 3% by mass to 20% by mass, and even more preferably it is from 5% by mass to 15% by mass.

The glass transition temperature (Tg) of the resin particles is preferably 30°C or more. More preferably, it is 40°C or more. Still more preferably, it is 50°C or more.

The particle diameter distribution of resin particles is not specifically limited and any one having broad particle diameter distribution or monodisperse particle diameter distribution may be used. Further, two or more kinds of resin particles having monodisperse particle diameter distribution may be used as a mixture.

### <Water-soluble Organic Solvent>

The aqueous ink for inkjet recording of the invention preferably includes at least one water-soluble organic solvent. The water-soluble organic solvent can be used for obtaining effects of anti-drying, wetting or penetration promoting. The effect of anti-drying and wetting means an effect for preventing clogging due to aggregate that is produced by deposition and drying of the aqueous ink at a discharge opening of a nozzle. As an anti-drying agent or a wetting agent, a water-soluble organic solvent having a lower vapor pressure compared to water is preferred.

The effect of penetration promoting is an effect for increasing the penetration ability of the ink to paper.

The water-soluble organic solvent that is included in the aqueous ink for inkjet recording of the invention can be selected appropriately from known water-soluble organic solvents, considering the functional activity as an anti-drying agent, a humectant or a penetration promoting agent.

Examples of the water soluble organic solvent include glycerin, 1,2,6-hexanetriol, trimethylol propane, ethylene glycol, propylene glycol, diethylene glycol, triethylene glycol, tetraethylene glycol, pentaethylene glycol, dipropylene glycol, alkane diols such as 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol (polyhydric alcohols); alkyl alcohols having 1 to 4 carbon atoms such as ethanol, methanol, butanol, propanol, or isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, 1-methyl-1-methyoxy butanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, dipropylene glycol mono-n-propyl ether, dipropylene glycol mono-iso-propyl ether; 2-pyrrolidone, N-methyl-2-pyrrolidone, 1,3-dimethyl-2-imidazolidinone, formamide, acetamide, dimethyl sulfoxide, sorbitol, sorbitan, acetin, diacetin, triacetin, sulforane and the like. These can be used alone or in combination of two or more.

sugars such as glucose, mannose, fructose, ribose, xylose, arabinose, galactose, aldonic acid, glucitol, maltose, cellobiose, lactose, sucrose, trehalose, or maltotriose; sugar alcohols; hyaluronic acids; so called solid humectants including ureas and the like may also be preferably used in a combination with the above water-soluble organic solvent.

As an anti-drying agent or a humectant, polyhydric alcohols are useful. Examples thereof include glycerin, ethylene glycol, diethylene glycol, triethylene glycol, propylene glycol, dipropylene glycol, tripropylene glycol, 1,3-butane diol, 2,3-butane diol, 1,4-butane diol, 3-methyl-1,3-butane diol, 1,5-pentane diol, tetraethylene glycol, 1,6-hexane diol, 2-methyl-2,4-pentane diol, polyethylene glycol, 1,2,4-butanetriol, 1,2,6-hexanetriol and the like. These may be used alone or in combination of two or more.

As a penetration agent, polyol compounds are preferred. Examples of aliphatic diol include 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol, 5-hexen-1,2-diol, 2-ethyl-1,3-hexanediol and the like. Among these, preferred examples include 2-ethyl-1,3-hexanediol and 2,2,4-trimethyl-1,3-pentanediol.

The organic solvent can be used alone or in combination of two or more.

The content of the organic solvent is preferably in the range of from 1% by mass to 60% by mass, and more preferably from 5% by mass to 40% by mass in the aqueous ink.

The aqueous ink for inkjet recording of the invention includes water and the amount of water is not specifically limited. A preferred amount of water is from 10% by mass to 99% by mass. More preferred amount of water is from 30% by mass to 80% by mass, and even more preferred amount of water is from 50% by mass to 70% by mass.

### <Surfactant>

The aqueous ink for inkjet recording of the invention preferably includes at least one surfactant. The surfactant is employed as an agent for controlling surface tension, and examples thereof include a non-ionic, a cationic, an anionic and a betaine type surfactant.

To achieve good discharge of droplets with an inkjet method, the surfactant is preferably included in an amount which can control the surface tension of the aqueous ink to be in the range of from 20 mN/m to 60 mN/m. Especially, it is preferred to be included in an amount which can control the surface tension to be in the range of from 20 mN/m to 45 mN/m. It is more preferred to be included in an amount which can control the surface tension to be in the range of from 25 mN/m to 40 mN/m.

As the surfactant, a compound which has a structure including both hydrophilic part and hydrophobic part in the molecule can be effectively used. Further, any of an anionic surfactant, a cationic surfactant, an amphoteric surfactant, and a non-ionic surfactant can be used.

Specific examples of an anionic surfactant include sodium dodecylbenzene sulfonate, sodium lauryl sulfate, sodium alkyldiphenyl ether disulfonate, sodium alkylnaphthalene sulfonate, sodium dialkylsulfosuccinate, sodium stearate, potassium oleate, sodium dioctylsulfosuccinate, sodium polyoxyethylene alkyl ether sulfate, sodium polyoxyethylene alkyl ether sulfate, sodium polyoxyethylene alkylphenyl ether sulfate, sodium dialkyl sulfosuccinate, sodium stearate, sodium oleate, sodium t-octylphenoxyethoxypolyethoxyethyl sulfate, and the like. It can be used alone or in combination of two or more of them.

Examples of a cationic surfactant include a tetraalkyl ammonium salt, an alkyl amine slat, a benzalkonium salt, an alkyl pyridium salt, an imidazolium salt, and the like. Specific examples thereof include dihydroxy ethylstearyl amine, 2-heptadecenyl-hydroxyethyl imidazoline, lauryl dimethylbenzyl ammonium chloride, cetylpyridinium chloride, stearamide methylpyridum chloride and the like.

Examples of an amphoteric surfactant include lauryldimethylamino acetic acid betaine, 2-alkyl-N-carboxymethyl-N-hydroxyethyl imidazolinium betaine, coconut oil fatty acid amidopropyldimethylaminoacetic acid betaine, polyoctyl polyaminoethylglycine, and other imidazoline derivatives.

Examples of a non-ionic surfactant include an acetylene glycol surfactant, an acetylene alcohol surfactant, polyoxyethylene alkyl ether, and polyoxyethylene phenyl ether. In the invention, from the viewpoint of suppressing foaming of the aqueous ink, it is preferable to use a non-ionic surfactant, and it is more preferable to use an acetylene glycol surfactant.

Examples of an acetylene glycol surfactant include 2,4,7,9-tetramethyl-5-decin-4,7-diol, 3,6-dimethyl-4-octin-3,6-diol, 3,5-dimethyl-1-hexin-3-ol, substances obtained by 1 to 30 (as an average number) ethylene oxy group(s) or propylene oxy group(s) are added to each of a plural hydroxy groups in any of the above described substances. As the acetylene glycol surfactant, a commercially available product may be used, and examples thereof include OLFINE 1010 and OLFINE STG (both are manufactured by Nisshin Chemical Industry, Ltd.).

Specific examples of polyoxyethylene alkyl ether and polyoxyethylene phenyl ether include polyoxyethylene lauryl ether, polyoxyethylene octyl phenyl ether, polyoxyethylene oleyl phenyl ether, polyoxyethylene nonyl phenyl ether, oxyethylene-oxypropylene block copolymer, t-octylphenoxyethylpolyethoxyethanol, nonylphenoxyethylpolyethoxyethanol and the like.

In the invention, the surfactant may be used alone or in a combination of two or more of them.

The content of the surfactant in the aqueous ink for inkjet recording is not specifically limited. It is preferably 0.1% by mass or more, more preferably from 0.1% by mass to 2.0% by mass, and even more preferably from 0.5% by mass to 1.5% by mass.

The aqueous ink for inkjet recording preferably contains an acetylene glycol surfactant as the surfactant in an amount of from 0.1% by mass to 2.0% by mass, and more preferably in an amount of from 0.5% by mass to 1.5% by mass.

### <Other Components>

The aqueous ink for inkjet recording of the invention may include, in addition to the above described components, other components such as an UV absorbing agent, a fade preventing agent, a fungicide, an anti-corrosive agent, an anti-oxidant, an emulsification stabilizer, a preservative, an anti-foaming agent, a viscosity controlling agent, a dispersion stabilizer, a chelating agent and the like, if necessary.

### -Physical Properties of Aqueous Ink Composition-

The surface tension of the aqueous ink for inkjet recording according to the invention (at 25°C) is preferably 20 mN/m or more but 60 mN/m or less. More preferably, it is 20 mN/m or more but 45 mN/m or less. Still more preferably, it is 25 mN/m or more but 40 mN/m or less.

The surface tension is measured by using AUTOMATIC SURFACE TENSIOMETER CBVP-Z (trade name, manufactured by Kyowa Interface Science Corp.) under the condition of testing the aqueous ink at 25°C.

The viscosity of the aqueous ink for inkjet recording according to the invention at 20°C is preferably 1.2mPa·s or more but 15.0mPa·s or less, more preferably 2mPa·s or more but less than 13mPa·s, and even more preferably 2.5mPa·s or more but less than 10mPa·s.

The viscosity is measured by using VISCOMETER TV-22 (trade name, manufactured by TOKI SANGYO CO. LTD) under the condition of testing the aqueous ink at 20°C.

The aqueous ink for inkjet recording according to the invention can be used for forming a color image having multiple colors (e.g., full color image). For forming a full color image, an ink composition having magenta hue, an ink composition having cyan hue, and an ink composition having yellow hue, and optionally ink compositions having other hues including red (R), green (G), blue (B), white (W) or an ink composition having so called specific color in a printing field can be used.

### [Method for Manufacturing Aqueous Ink for Inkjet Recording]

The method for manufacturing an aqueous ink for inkjet recording of the invention is a method for manufacturing an aqueous ink for inkjet recording which includes a pigment dispersion manufactured by a method for manufacturing a pigment dispersion of the invention, and includes a first dispersion step of mixing a first water-insoluble resin, an organic solvent, pigment and water, and dispersing to form an aqueous dispersion; a second dispersion step of adding a second water-insoluble resin into the pigment dispersion obtained by the first dispersion step and dispersing further the aqueous dispersion; a step of removing at least a part of the organic solvent from the aqueous dispersion obtained by the second dispersion step; a step of preparing an aqueous ink for inkjet recording by using the obtained pigment dispersion (and preferably further using a latex); and an other step if necessary.

The step of obtaining the aqueous dispersion and the step of obtaining the pigment dispersion are respectively similar to the steps in the method for manufacturing the pigment dispersion.

In the invention, the pigment dispersion obtained as described above may be mixed with additional component(s) such as a water-soluble organic solvent, a surfactant, a preservative, a fungicide and the like, which may be selected as necessary, and an aqueous ink of inkjet recording may be produced.

By the above-described method, an aqueous ink for inkjet recording that is excellent in storage stability and jetting stability can be produced efficiently.

### -Recording Mode-

The aqueous ink for inkjet recording of the invention can used in a recording mode in which an image is recorded on a recording medium by discharging with an inkjet method according to image information to be recorded (first recording mode).

Alternatively, the aqueous ink of the invention can also be used in a recording mode in which an aqueous liquid composition (i.e., a aggregating liquid), which includes a component capable of causing aggregation of pigment particles and the like in an aqueous ink when admixed with it, is used so that an image is recorded by contacting the aqueous ink with the aqueous liquid composition (second recording mode).

### -Aqueous Liquid Composition-

Herein below, the aqueous liquid composition that is used for the second recording mode will be explained.

The aqueous liquid composition includes an aggregating component which can cause aggregation of pigment contained in the aqueous ink when admixed with it, and if necessary, it may include further components.

### -Aggregating Component-

The aqueous liquid composition includes at least one aggregating component which causes aggregation of pigment particles and the like included in an aqueous ink. When the aqueous liquid composition is admixed with the aqueous ink that is discharged by an inkjet method, aggregation of the pigment, etc., stably dispersed in the aqueous ink, is promoted.

An example of the aqueous liquid composition includes a liquid composition which can cause an aggregate by changing pH of the aqueous ink. In this case, pH (at 25°C) of the aqueous liquid composition is preferably 6 or less, and more preferably 4 or less. Among these, pH (at 25°C) is in the range of from 1 to 4, and more preferably in the range of from 1 to 3. At the same time, pH (at 25°C) of the aqueous ink is preferably 7.5 or more, and more preferably 8 or more.

In particular, in terms of image density, resolution and performing high speed inkjet recording, pH (at 25°C) of the aqueous ink is preferably 7.5 or more, and pH (at 25°C) of the aqueous liquid composition is preferably 4 or less.

Examples of aggregating components which cause aggregation of pigment particles and the like include polyvalent metal salts, an organic acid, polyallylamine, and derivatives thereof, etc.

Preferred examples of the polyvalent metal salts include salts of an alkaline earth metal of Group 2 of the periodic table (for example, magnesium and calcium), a transition metal of Group 3 of the periodic table (for example, lanthanide), a cation of Group 13 of the periodic table (for example, aluminum), lanthanides (for example, neodymium) and the like. As a salt of these metals, carboxylic acid salt (formic acid, acetic acid, benzoic acid salt and the like), nitric acid salt, chlorides, and thiocyanic acid salt are preferred. Among these, more preferred are calcium salt or magnesium salt of a carboxylic acid (formic acid, acetic acid, benzoic acid salt and the like), calcium salt or magnesium salt of nitric acid, calcium chloride, magnesium chloride and calcium salt or magnesium salt of thiocyanic acid.

The organic acid is preferably selected from polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidone carboxylic acid, pyrone carboxylic acid, pyrrole carboxylic acid, furane carboxylic acid, pyridine carboxylic acid, coumarine acid, thiophen carboxylic acid, nicotinic acid, or derivatives of these compounds, or salts of them.

The aggregating components can be used alone or in combination of two or more.

The content of the aggregating components which cause the aggregation of a pigment, etc. is preferably from 1% by mass to 20% by mass, more preferably from 5% by mass to 20% by mass, and even more preferably from 10% by mass to 20% by mass in the aqueous liquid composition.

### -Image Recording Method-

The aqueous ink for inkjet recording of the invention can be used for any of the first recording mode or second recording mode.

In the first recording mode, an ink application step is included in which the aqueous ink of the invention is applied on a recording medium according to an inkjet method.

In the second recording mode, an ink application step in which the aqueous ink of the invention is applied on a recording medium according to an inkjet method, and an aggregating component application step in which the aqueous liquid composition including a component which causes aggregation of pigment particles, etc. contained in the aqueous ink is applied on the recording medium are included, so that the aqueous ink and the aqueous liquid composition are brought into contact with each other to form an image.

In any of the first recording mode or second recording mode, when the aqueous ink that is obtained using, as a colorant, a pigment dispersion manufactured by a method for manufacturing a pigment dispersion of the present invention is used, a favorable dispersion stability may be enabled, and a black image with high color density can be obtained, and also failure in ink discharge directivity at the time of discharging ink is inhibited because adhesion or deposition of the aggregate at a head nozzle part is reduced and the adhered aggregate can be easily removed. As a result, the occurrence of an image problem such as white spots, etc. is inhibited, so that an image with high resolution can be obtained. Still further, frequency of maintenance of a discharge apparatus can be lowered and the maintainability can be improved.

In the ink application step, the aqueous ink is applied by an inkjet method. Specifically, to a medium to be recorded, i.e., a plain paper, a resin coated paper, for example paper for an inkjet printer as described in publications of JP-A Nos. 8-169172, 8-27693, 2-276670, 7-276789, 9-323475, 62-238783, 10-153989, 10-217473, 10-235995, 10-337947, 10-217597, a film, paper for electrophotography, cloth, glass, a metal, or a porcelain, the aqueous ink is discharged by energy supply to form a colored image. In addition, as a method for inkjet recording preferred for the invention, those disclosed in the paragraph Nos. 0093-0105 of JP-A No. 2003-306623 can be used.

Inkjet method is not specifically limited and may be any of known methods, for example, a charge control method which includes discharging ink using an electrostatic inducing force, drop on demand method (i.e., pressure pulse method) which utilizes vibration pressure of a piezoelectric element, a sonic inkjet method which includes discharging ink by using radiation pressure caused when the electric signal is converted into a sonic beam and radiated to the ink, or a thermal inkjet method (registered trademark; Bubblejet) which includes forming air bubbles by heating ink and using the pressure generated therefrom. As the inkjet method, the method which has been disclosed in JP-A No. 54-59936 and includes using a drastic volume change in ink by the action of heat energy, and discharging ink from a nozzle based on the working power generated from the change can be effectively used.

In addition, examples of the inkjet method include a method which includes discharging many times a small volume of the ink with low concentration (so called, photoink), a method which includes improving the quality of image by using multiple inks having the same color but with different concentration, or a method which includes using a colorless and transparent ink.

In addition, the inkjet head that is used for the inkjet method can be either on demand type or a continuous type. Further, specific examples of a discharging method include electromechanical transducer type (for example, single cavity type, double cavity type, bender type, piston type, share mode type, shared wall type and the like), electromechanical transducer type (for example, thermal inkjet type, Bubblejet type (registered trademark)), an electrostatic suction type (for example, electric field control type, slit jet type and the like) and a discharge type (for example, a spark jet type and the like) and the like. Any of these discharge methods can be used.

Further, the ink nozzle which is used for recording according to the inkjet method is not specifically limited. Rather, depending on the purpose of use, it can be appropriately selected.

In the aggregating component application step in the second recording mode, the aqueous liquid composition is applied on a recording medium either before or after the application of the aqueous ink. The application of the aqueous liquid composition can be carried out by a known method such as a coating method, an inkjet method or an dipping method. As a coating method, a known coating method using a bar coater, an extrusion die coater, an air doctor coater, a blade coater, a rod coater, a knife coater, a squeeze coater, a reverse roll coater, a bar coater and the like can be used. Specific details about an inkjet method are the same as those described above.

In the second recording mode of the invention, it is preferable that the aqueous liquid composition is applied first and then an ink application step is carried out. That is, in a preferred exemplary embodiment, before applying the aqueous ink to a recording medium, the aqueous liquid composition which causes aggregation of pigment included in the aqueous ink is applied, and thereafter, the aqueous ink is applied to be in contact with the aqueous liquid composition, which has been already applied to the recording medium, so as to form an image. In accordance with this, high speed inkjet recording can be performed, and an image with high density and high resolution can be obtained by the high speed recording.

Further, the aggregation component application step preferably includes a step of removing at lest a part of the solvent in the aqueous liquid composition.

When recording an image, a polymer latex may be also used for obtaining gloss or water resistance or improving weatherability. The period during which the polymer latex is applied may be any of before and after the application of the aqueous ink. Alternatively, they may be applied simultaneously. Thus, the polymer latex compound may be used in a mode in which it is applied to a recording medium, added to the aqueous ink, or provided as a separate liquid including the polymer latex compound.

Specifically, the methods that are disclosed in JP-A Nos. 2002-166638, 2002-121440, 2002-154201, 2002-144696, and 2002-080759 can be preferably used.

The method for recording an image according to the invention may include an additional step in addition to the ink application step and the aggregating component application step. Additional step is not specifically limited and can be appropriately selected depending on a specific purpose. For example, drying and removing an organic solvent that is included in the aqueous ink applied to a recording medium, melt-fixing a polymer latex or resin particles included in the aqueous ink, and the like can be mentioned.

Another example of a method for recording an image of the invention involves using an intermediate transfer body as a recording medium to which an image is first formed, recording an image on the intermediate transfer body, and then transferring the image recorded on the intermediate transfer body to the medium to be recorded.

In case of the second recording mode, an exemplary method may include an ink application step in which an intermediate transfer body is used as a recording medium to which an image is first formed and to this intermediate transfer body the aqueous ink of the invention described before is applied by an inkjet method, an aggregating component application step in which an aqueous liquid composition including component that can cause aggregation of the pigment included in the aqueous ink is applied to the intermediate transfer body so that an image is formed on the intermediate transfer body by contacting the aqueous ink with the aqueous liquid composition, and a transfer step in which the image formed on the intermediate transfer body is transferred to a final recording medium.

In this case, same as described above, other steps such as a drying and removing process, a heating and fixing process and the like can be further included. The aggregating component application step is preferably carried out before the ink application step.

### EXAMPLES

Herein below, the invention is explained in greater detail in view of the following Examples. However, the invention is not limited to the following Examples as long as no exceeding of the subject matter of the invention. In addition, unless specifically mentioned otherwise, the term "part" is based on the mass.

The weight average molecular weight was measured by gel permeation chromatography (GPC). As a GPC instrument, HLC-8020GPC (trade name, manufactured by Tosoh Corp.) is used and three columns of TSKGEL, SUPER MULTIPORE HZ-H (trade name,manufactured by Tosoh Corp., 4.6mmID x 15cm) were used. THF (tetrahydrofuran) was used as an eluent. As the measurement conditions, the sample concentration was 0.35% by mass, the flow rate was 0.35 mL/min, the sample injection amount was 10 µL, and the measurement temperature was 40°C, and an IR detector was used for detection. The calibration curve was established by using eight samples of "STANDARD SAMPLE TSK STANDARD, POLYSTYRENE": F-40, F-20, F-4, F-1, A-5000, A-2500, A-1000 (trade name, manufactured by Tosoh Corp.) and n-propylbenzene.

### (Synthetic Example 1)

### -Synthesis of Resin Dispersant (Water-insoluble Resin) P-1-

To a 1,000 mL three-neck flask which is equipped with a stirrer and a condenser, methy lethyl ketone (88g) was placed and then heated to 72°C under nitrogen atmosphere. To this flask, a solution in which 0.85g of dimethyl-2,2'-azobisisobutyrate, 70 g of phenoxyethyl methacrylate, 10g of methacrylic acid and 20g of methyl methacrylate 20g were dissolved in 50g of methyl ethyl ketone was added dropwise over three hours. After completion of the dropwise addition, the content in the flask was allowed to react for an additional one hour. Then, a solution in which 0.42g of dimethyl-2,2'-azobisisobutyrate was dissolved in 2g of methyl ethyl ketone was added thereto, the temperature of the resultant mixture was raised to 78°C and maintained at 78°C for four hours while heating. The resulting reaction solution was subjected to re-precipitation twice with an excess amount of hexane, and the precipitated resin was dried and 96.5g of phenoxyethyl methacrylate/methyl methacrylate/methacrylic acid (copolymerization ratio [weight ratio] = 70/20/10) copolymer (resin dispersant P-1) was obtained.

The composition of the thus obtained resin dispersant P-1 was confirmed with ¹H-NMR. The weight average molecular weight (Mw) measured with GPC was 43,500. The acid number of the polymer obtained according to the measurement based on the method described in JIS Standard (JIS K 0070:1992), the disclosure of which is incorporated by reference herein, was 65.2 mg KOH/g.

### - Synthesis of Resin Dispersants P-2 and P-3 (Water-insoluble Resin) -

Except that 70g of phenoxyethyl methacrylate, 10g of methacrylic acid, and 20g of methyl methacrylate for the synthesis of the resin dispersant P-1 were changed to the monomers and the proportions for P-2 and P-3 shown in Table I respectively, and the conditions were changed so as to obtain the weight average molecular weights (Mw) of P-2 and P-3 shown in Table 1 respectively, resin dispersants P-2 and P-3 were synthesized in almost the manner similar to that in the synthesis of a resin dispersant P-1.

### Example 1

### - Preparation of Dispersion Z1 of Resin-Coated Carbon Black Particles (Pigment Dispersion) -

The following components were mixed and dispersed with a beads mill using zirconia beads having a diameter of 0.1 mm for 2 hours as a first dispersion step, and thereafter added the following resin dispersant composition described below into the dispersion obtained by the first dispersion step and further dispersed for 2 hours, as a second dispersion step. From the resulting dispersion, the methyl ethyl ketone was removed at 55°C under reduced pressure, and further, a part of the water was removed, whereby a dispersion of resin-coated carbon black particles having a carbon black concentration of 10.0% by mass was prepared (a remove step).

### <Composition of Carbon Black Dispersion at First Dispersion Step>

- CARBON BLACK No. 2600 10.0 parts [trade name, manufactured by Mitsubishi Chemical Co. Ltd., a primary particle diameter: 13nm, pH: 6.5]
- Resin dispersant P-1 (water-insoluble resin) 3.8 parts
- Methyl ethyl ketone (organic solvent) 18.0 parts
- 1 mol/L NaOH aqueous solution (neutralizing agent) 6.8 parts
- Ion-exchanged water 55.7 parts

### <Composition of Resin Dispersant added at Second Dispersion Step>

- Resin dispersant P-1 (water-insoluble resin) 1.0 parts
- Methyl ethyl ketone (organic solvent) 2.7 parts

### -Particle Size Measurement of Resin-Coated Carbon Black Particles-

The resulting dispersion of resin-coated carbon black particles was measured for its volume-average particle size (which is referred as MV in some cases) by a dynamic light scattering method using a particle size distribution measuring instrument NANOTRAC UPA-EX 150 (trade name, manufactured by NIKKISO Co., Ltd.). In this measurement, 10 mL of ion-exchanged water was added to 30 µL of the resin-coated carbon black particle dispersion to prepare a measurement sample, and the thus prepared sample was then measured at a controlled temperature of 25°C. The measurement results are shown in Table 1.

### < Evaluation Criteria >

AA: The volume-average particle size (MV) is less than 70 nm.
A: MV is 70 nm or more but less than 100 nm.
B: MV is 100 nm or more but less than 120 nm.
C: MV is 120 nm or more.

### -Preparation of Aqueous Ink IZI-

An aqueous ink of the following composition was prepared by using the resulting dispersion of resin-coated carbon black particles.

### (Composition of Aqueous Ink IZ1)

- Dispersion Z1 of resin-coated carbon black particles 40.0 parts
- Glycerin 10.0 parts
- Diethylene glycol 5.0 parts
- Diethylene glycol monoethyl ether 10.0 parts
- PROXEL XL-2 (trade name, manufactured by Arch Chemicals Japan Inc.) 0.05 parts
- Benzotriazole 0.05 parts
- Olfin E1010 (trade name, manufactured by Nisshin Chemical Industry Co., Ltd. 1.0 parts
- Ion-exchanged water 33.9 parts

### -Evaluation-

With respect to the dispersion of resin-coated carbon black particles and the aqueous ink as described above, the following measurements and evaluations were performed. The measurement and evaluation results are shown in Table 1 below.

### Ink stability

The obtained aqueous ink prepared using the dispersion of resin-coated carbon black particles was sealed in a PET container and stored for 14 days in a 60°C thermostatic chamber, whereupon the viscosity and average particle diameter were measured. The viscosity was measured using an R100 viscometer (trade name, manufactured by Toki Sangyo Co., Ltd.) under conditions of 25°C and a cone rotation rate of 20 rpm. The average particle diameter was measured by measuring the volume-average particle diameter D50 using an optical scatter diffraction-type particle size distribution analyzer LA910 (trade name, manufactured by Horiba, Ltd.). Ink stability was evaluated according to the following criteria. The evaluation results are shown in Table 1.

### Ejection recovery properties

The aqueous ink using the dispersion of resin-coated carbon black particles as obtained above was sealed in a PET container and stored for 14 days in a 60°C thermostatic chamber. Using IMAGE COLOR: PHOTOFINISH PRO (trade name, manufactured by Fujifilm Corporation) as the recording medium, an inkjet device provided with a prototype print head with 256 nozzles at 600 dpi was prepared as the inkjet recording device. The aqueous ink that had been stored for 14 days in the 60°C thermostatic chamber was loaded into the device.

After the aqueous ink had been ejected from the head for 30 minutes, wiping was performed using a CLEAN WIPER FF-390c (manufactured by Kuraray Co., Ltd.) after application of 15 KPa of pressure for 10 seconds, as maintenance work. ejection was then continued for a further 5 minutes and, after 5 minutes had elapsed, images formed by printing a solid image and fine line images on the IMAGE COLOR: PHOTOFINISH PRO (trade name, manufactured by Fujifilm Corporation) were observed. The observed images were evaluated by the naked eye according to the following criteria.

### Evaluation criteria

A Favorable, with no dot blemishes caused by occurrence of white spots or the like
B Some dot blemishes are observed, but are deemed to be within tolerable limits for practical use
C Many image defects caused by occurrence of white spots are observed.

### Example 2

An aqueous ink for inkjet recording was prepared and evaluated in a manner substantially similar to that in Example 1 except that resin dispersant P-1 was replaced with resin dispersant P-2 in preparation of the dispersion Z1 of resin-coated carbon black particles in Example 1.

### Example 3

An aqueous ink for inkjet recording was prepared and evaluated in a manner substantially similar to that in Example 1 except that resin dispersant P-1 was replaced with resin dispersant P-3 in preparation of the dispersion Z1 of resin-coated carbon black particles in Example 1.

### Example 4

An aqueous ink for inkjet recording was prepared and evaluated in a manner substantially similar to that in Example 1 except that carbon black No. 2600 (trade name, manufactured by Mitsubishi Chemical Co. Ltd., a primary particle diameter: 13nm, pH: 6.5) was replaced with Carbon black NIPEX 180-IQ (trade name, manufactured by Degussa, a primary particle diameter: 15nm, pH: 4.5) in preparation of the dispersion Z1 of resin-coated carbon black particles in Example 1.

### Example 5

An aqueous ink for inkjet recording was prepared and evaluated in a manner substantially similar to that in Example 1 except that carbon black No. 2600 (trade name, manufactured by Mitsubishi Chemical Co. Ltd., a primary particle diameter: 13nm, pH: 6.5) was replaced with Carbon black NIPEX 160-IQ (trade name, manufactured by Degussa, a primary particle diameter: 20nm, pH: 4.5) in preparation of the dispersion Z1 of resin-coated carbon black particles in Example 1.

### Example 6

An aqueous ink for inkjet recording was prepared and evaluated in a manner substantially similar to that in Example 1 except that in preparation of the dispersion Z1 of resin-coated carbon black particles (pigment dispersion) in Example 1, the composition of the dispersion of resin-coated carbon black particles was changed as follows.

### - Preparation of Dispersion Z6 of Resin-Coated Carbon Black Particles (Pigment Dispersion) -

The following components were mixed and dispersed with a beads mill using zirconia beads having a diameter of 0.1 mm for 2 hours as a first dispersion step, and thereafter added the following resin dispersant composition described below into the dispersion obtained by the first dispersion step and further dispersed for 2 hours, as a second dispersion step. From the resulting dispersion, the methyl ethyl ketone was removed at 55°C under reduced pressure, and further, a part of the water was removed, whereby a dispersion of resin-coated carbon black particles having a carbon black concentration of 10.0% by mass was prepared.

### <Composition of Carbon Black Dispersion at First Dispersion Step>

- CARBON BLACK No. 2600 10.0 parts [trade name, manufactured by Mitsubishi Chemical Co. Ltd., a primary particle diameter: 13nm, pH: 6.5]
- Resin dispersant P-1 (water-insoluble resin) 5.0 parts
- Methyl ethyl ketone (organic solvent) 22.0 parts
- 1 mol/L NaOH aqueous solution (neutralizing agent) 8.9 parts
- Ion-exchanged water 46.6 parts

### <Composition of Resin Dispersant added at Second Dispersion Step>

- Resin dispersant P-1 (water-insoluble resin) 2.0 parts
- Methyl ethyl ketone (organic solvent) 5.4 parts

### Example 7

An aqueous ink for inkjet recording was prepared and evaluated in a manner substantially similar to that in Example 1 except that in preparation of the dispersion Z1 of resin-coated carbon black particles (pigment dispersion) in Example 1, the composition of the dispersion of resin-coated carbon black particles was changed as follows.

### - Preparation of Dispersion Z7 of Resin-Coated Carbon Black Particles (Pigment Dispersion) -

The following components were mixed and dispersed with a beads mill using zirconia beads having a diameter of 0.1 mm for 2 hours as a first dispersion step, and thereafter added the following resin dispersant composition described below into the dispersion obtained by the first dispersion step and further dispersed for 2 hours, as a second dispersion step. From the resulting dispersion, the methyl ethyl ketone was removed at 55°C under reduced pressure, and further, a part of the water was removed, whereby a dispersion of resin-coated carbon black particles having a carbon black concentration of 10.0% by mass was prepared (a remove step).

### <Composition of Carbon Black Dispersion at First Dispersion Step>

- CARBON BLACK No. 2600 10.0 parts [trade name, manufactured by Mitsubishi Chemical Co. Ltd., a primary particle diameter: 13nm, pH: 6.5]
- Resin dispersant P-1 (water-insoluble resin) 5.0 parts
- Methyl ethyl ketone (organic solvent) 15.0 parts
- 1 mol/L NaOH aqueous solution (neutralizing agent) 8.9 parts
- Ion-exchanged water 59.2 parts

### <Composition of Resin Dispersant added at Second Dispersion Step>

- Resin dispersant P-1 (water-insoluble resin) 0.5 parts
- Methyl ethyl ketone (organic solvent) 1.4 parts

### Example 8

An aqueous ink for inkjet recording was prepared and evaluated in a manner substantially similar to that in Example 1 except that in preparation of the dispersion Z1 of resin-coated carbon black particles (pigment dispersion) in Example 1, the composition of the dispersion of resin-coated carbon black particles was changed as follows.

### - Preparation of Dispersion Z8 of Resin-Coated Carbon Black Particles (Pigment Dispersion) -

The following components were mixed and dispersed with a beads mill using zirconia beads having a diameter of 0.1 mm for 2 hours as a first dispersion step, and thereafter added the following resin dispersant composition described below into the dispersion obtained by the first dispersion step and further dispersed for 2 hours, as a second dispersion step. From the resulting dispersion, the methyl ethyl ketone was removed at 55°C under reduced pressure, and further, a part of the water was removed, whereby a dispersion of resin-coated carbon black particles having a carbon black concentration of 10.0% by mass was prepared (a remove step).

### <Composition of Carbon Black Dispersion at First Dispersion Step>

- CARBON BLACK NIPEX 160-IQ 10.0 parts [trade name, manufactured by Degussa, a primary particle diameter: 20nm, pH: 4.5]
- Resin dispersant P-1 (water-insoluble resin) 5.5 parts
- Methyl ethyl ketone (organic solvent) 15.0 parts
- 1 mol/L NaOH aqueous solution (neutralizing agent) 9.8 parts
- Ion-exchanged water 58.2 parts

### <Composition of Resin Dispersant added at Second Dispersion Step>

- Resin dispersant P-1 (water-insoluble resin) 0.4 parts
- Methyl ethyl ketone (organic solvent) 1.1 parts

### Example 9

An aqueous ink for inkjet recording was prepared and evaluated in a manner substantially similar to that in Example 1 except that in preparation of the dispersion Z1 of resin-coated carbon black particles (pigment dispersion) in Example 1, the composition of the dispersion of resin-coated carbon black particles was changed as follows.

### - Preparation of Dispersion Z9 of Resin-Coated Carbon Black Particles (Pigment Dispersion) -

The following components were mixed and dispersed with a beads mill using zirconia beads having a diameter of 0.1 mm for one hour as a first dispersion step, and thereafter added the following resin dispersant composition described below into the dispersion obtained by the first dispersion step and further dispersed for 3 hours, as a second dispersion step. From the resulting dispersion, the methyl ethyl ketone was removed at 55°C under reduced pressure, and further, a part of the water was removed, whereby a dispersion of resin-coated carbon black particles having a carbon black concentration of 10.0% by mass was prepared (a remove step).

### <Composition of Carbon Black Dispersion at First Dispersion Step>

- CARBON BLACK NIPEX 160-IQ 10.0 parts [trade name, manufactured by Degussa, a primary particle diameter: 20nm, pH: 4.5]
- Resin dispersant P-1 (water-insoluble resin) 5.5 parts
- Methyl ethyl ketone (organic solvent) 15.0 parts
- 1 mol/L NaOH aqueous solution (neutralizing agent) 9.8 parts
- Ion-exchanged water 58.2 parts

### <Composition of Resin Dispersant added at Second Dispersion Step>

- Resin dispersant P-1 (water-insoluble resin) 0.4 parts
- Methyl ethyl ketone (organic solvent) 1.1 parts

### Example 10

An aqueous ink for inkjet recording was prepared and evaluated in a manner substantially similar to that in Example 1 except that in preparation of the dispersion Z1 of resin-coated carbon black particles (pigment dispersion) in Example 1, the composition of the dispersion of resin-coated carbon black particles was changed to a composition of the dispersion of resin-coated cyan particles as follows.

### - Preparation of Dispersion Z10 of Resin-Coated Cyan Particles (Pigment Dispersion) -

The following components were mixed and dispersed with a beads mill using zirconia beads having a diameter of 0.1 mm for 2 hours as a first dispersion step, and thereafter added the following resin dispersant composition described below into the dispersion obtained by the first dispersion step and further dispersed for 2 hours, as a second dispersion step. From the resulting dispersion, the methyl ethyl ketone was removed at 55°C under reduced pressure, and further, a part of the water was removed, whereby a dispersion of resin-coated cyan particles having a concentration of cyan pigment of 10.0% by mass was prepared (a remove step).

### <Composition of Cyan Pigment Dispersion at First Dispersion Step>

- C.I. Pigment Blue 15:3 10.0 parts [trade name: PHTHALOCYANIN BLUE-A220, manufactured by Dainichiseika Co. Ltd.]
- Resin dispersant P-1 (water-insoluble resin) 3.0 parts
- Methyl ethyl ketone (organic solvent) 15.0 parts
- 1 mol/L NaOH aqueous solution (neutralizing agent) 4.2 parts
- Ion-exchanged water 64.8 parts

### <Composition of Resin Dispersant added at Second Dispersion Step>

- Resin dispersant P-1 (water-insoluble resin) 0.8 parts
- Methyl ethyl ketone (organic solvent) 2.2 parts

### Comparative Example 1

An aqueous ink for inkjet recording was prepared and evaluated in a manner substantially similar to that in Example 1 except that in preparation of the dispersion Z1 of resin-coated carbon black particles (pigment dispersion) in Example 1, the composition of the dispersion of resin-coated carbon black particles was changed as follows.

### - Preparation of Dispersion H1 of Resin-Coated Carbon Black Particles -

The following components were mixed and dispersed with a beads mill using zirconia beads having a diameter of 0.1 mm for 4 hours. From the resulting dispersion, the methyl ethyl ketone was removed at 55°C under reduced pressure, and further, a part of the water was removed, whereby a dispersion of resin-coated Carbon Black particles having a concentration of Carbon Black of 10.0% by mass was prepared (a remove step).

### <Composition of Carbon Black Dispersion H1>

- CARBON BLACK No. 2600 10.0 parts [trade name, manufactured by Mitsubishi Chemical Co. Ltd., a primary particle diameter: 13nm, pH: 6.5]
- Resin dispersant P-1 (water-insoluble resin) 4.8 parts
- Methyl ethyl ketone (organic solvent) 18.0 parts
- 1 mol/L NaOH aqueous solution (neutralizing agent) 8.6 parts
- Ion-exchanged water 58.6 parts

### Comparative Example 2

An aqueous ink for inkjet recording was prepared and evaluated in a manner substantially similar to that in Comparative Example 1 except that resin dispersant P-1 was replaced with resin dispersant P-2 in preparation of the dispersion H1 of resin-coated carbon black particles in Comparative Example 1.

### Comparative Example 3

An aqueous ink for inkjet recording was prepared and evaluated in a manner substantially similar to that in Comparative Example 1 except that resin dispersant P-1 was replaced with resin dispersant P-3 in preparation of the dispersion H1 of resin-coated carbon black particles in Comparative Example 1.

### Comparative Example 4

An aqueous ink for inkjet recording was prepared and evaluated in a manner substantially similar to that in Comparative Example 1 except that CARBON BLACK No. 2600 (trade name, manufactured by Mitsubishi Chemical Co. Ltd., a primary particle diameter: 13nm, pH: 6.5) was replaced with carbon black (trade name: NIPEX 180-IQ, manufactured by Degussa, a primary particle diameter: 15nm, pH: 4.5) in preparation of the dispersion H1 of resin-coated carbon black particles in Comparative Example 1.

### Comparative Example 5

An aqueous ink for inkjet recording was prepared and evaluated in a manner substantially similar to that in Comparative Example 1 except that in preparation of the dispersion H1 of resin-coated carbon black particles in Comparative Example 1, the composition of the dispersion of resin-coated carbon black particles was changed as follows.

### - Preparation of Dispersion H5 of Resin-Coated Cyan Pigment -

The following components were mixed and dispersed with a beads mill using zirconia beads having a diameter of 0.1 mm for 4 hours. From the resulting dispersion, the methyl ethyl ketone was removed at 55°C under reduced pressure, and further, a part of the water was removed, whereby a dispersion of resin-coated Cyan Pigment particles having a concentration of Cyan Pigment of 10.0% by mass was prepared.

### <Composition of Cyan Pigment Dispersion at First Dispersion Step>

- C.I. Pigment Blue 15:3 10.0 parts [trade name: PHTHALOCYANIN BLUE-A220, manufactured by Dainichiseika Co. Ltd.]
- Resin dispersant P-1 (water-insoluble resin) 3.8 parts
- Methyl ethyl ketone (organic solvent) 22.0 parts
- 1 mol/L NaOH aqueous solution (neutralizing agent) 5.3 parts
- Ion-exchanged water 58.9 parts

**Table I**

| | | Pigment Dispersion | | | | | *1 (%) | *2 (%) | P.D. | S.S. | R.P. |
|---|---|---|---|---|---|---|---|---|---|---|---|
| | | Pigment | Water-insoluble Resin | | | | | | | | |
| | | | | Polymer | MW | Acid Value (mgKOH/g) | | | | | |
| Example 1 | Z1 | CB (13 nm) | P-1 | PhMA/MMA/MAA (= 70 / 20 / 10) | 43500 | 65.2 | 38 | 10 | AA | A | B |
| Example 2 | Z2 | CB (13 nm) | P-2 | PhMA/EMA/MAA (= 50 / 39 / 11) | 48200 | 71.7 | 38 | 10 | AA | A | B |
| Example 3 | Z3 | CB (13 nm) | P-3 | PhMA/EA/AA (= 45 / 45 / 10) | 38900 | 65.2 | 38 | 10 | AA | A | B |
| Example 4 | Z4 | CB (15 nm) | P-1 | PhMA/MMA/MAA (= 70 / 20 / 10) | 43500 | 65.2 | 38 | 10 | AA | A | A |
| Example 5 | Z5 | CB (20 nm) | P-1 | PhMA/MMA/MAA (= 70 / 20 / 10) | 43500 | 65.2 | 38 | 10 | AA | A | A |
| Example 6 | Z6 | CB (13 nm) | P-1 | PhMA/MMA/MAA (= 70 / 20 / 10) | 43500 | 65.2 | 50 | 20 | AA | A | B |
| Example 7 | Z7 | CB (13 nm) | P-1 | PhMA/MMA/MAA (= 70 / 20 / 10) | 43500 | 65.2 | 50 | 5 | AA | A | B |
| Example 8 | Z8 | CB (20 nm) | P-1 | PhMA/MMA/MAA (= 70 / 20 / 10) | 43500 | 65.2 | 55 | 40 | A | A | A |
| Example 9 | Z9 | CB (20 nm) | P-1 | PhMA/MMA/MAA (= 70 / 20 / 10) | 43500 | 65.2 | 25 | 25 | A | A | B |
| Example 10 | Z10 | cyan | P-1 | PhMA/MMA/MAA (= 70 / 20 / 10) | 43500 | 65.2 | 30 | 8 | A | A | A |
| Comparative Example 1 | H1 | CB (13 nm) | P-1 | PhMA/MMA/MAA (= 70 / 20 / 10) | 43500 | 65.2 | 48 | - | C | B | C |
| Comparative Example 2 | H2 | CB (13 nm) | P-2 | PhMA/EMA/MAA (= 50 / 39 / 11) | 48200 | 71.7 | 48 | - | C | B | C |
| Comparative Example 3 | H3 | CB (13 nm) | P-3 | PhMA/EA/AA (= 45 / 45 / 10) | 38900 | 65.2 | 48 | - | C | B | C |
| Comparative Example 4 | H4 | CB (15 nm) | P-1 | PhMA/MMA/MAA (= 70 / 20 / 10) | 43500 | 65.2 | 48 | - | C | B | B |
| Comparative Example 5 | H5 | cyan | P-1 | PhMA/MMA/MAA (= 70 / 20 / 10) | 43500 | 65.2 | 38 | - | B | B | C |

In Table 1, *1 denotes an added amount percent by mass of the water-insoluble resin in the first dispersion process with respect to a mass of carbon black. *2 denotes an added amount percent by mass of the water-insoluble resin in the second dispersion process with respect to a mass of carbon black.

In the cases of Example 10 and Comparative Example 5, the added amount percent by mass of the water-insoluble resin was calculated by using a mass amount of cyan pigment instead of that of carbon black, respectively.

In Table 1, P.D. denotes evaluation results of measured particle size of resin-coated pigment particles. S.S. denotes evaluation results of ink stability. R.P. denotes evaluation results of ejection recovery properties.

In the column of Water-insoluble Resin in Table 1, PhMA denotes phenoxyethyl methacrylate, MMA denotes methyl methacrylate, EMA denotes ethyl methacrylate, EA denotes ethyl acrylate, MAA denotes methacrylic acid, AA denotes acrylic acid and MW denotes a weight-average molecular weight of the water-insoluble resin polymer, respectively.

As can be seen from Table 1, the pigment dispersions manufactured by the method for manufacturing a pigment dispersion according to the invention are excellent having fine particles. It can also be seen that the aqueous inks for inkjet recording in the invention are excellent in storage stability and recovery performance of ink ejection property.

According to the present invention, it is possible to provide a method for manufacturing a pigment dispersion that has favorable dispersion stability, and an aqueous ink for inkjet recording that is excellent in storage stability and ink ejection stability.

The foregoing description of the exemplary embodiments of the present invention has been provided for the purposes of illustration and description. It is not intended to be exhaustive or to limit the invention to the precise forms disclosed. The embodiments were chosen and described in order to best explain the principles of the invention and its practical applications, thereby enabling others skilled in the art to understand the invention for various embodiments and with the various modifications as are suited to the particular use contemplated. It will be obvious to those having skill in the art that many changes may be made in the above-described details of the preferred embodiments of the present invention. It is intended that the scope of the invention be defined by the following claims.

## Claims

1. A manufacturing method of a pigment dispersion comprising:
a first dispersion process that mixes and disperses a first water-insoluble resin, an organic solvent, pigment and water;
a second dispersion process that adds a second water-insoluble resin to a resulting dispersion of the first dispersion process and further disperses the dispersion; and
a removal process that removes at least a part of the organic solvent from a resulting aqueous dispersion of the second dispersion process, wherein
at least one of the first water-insoluble resin and the second water-insoluble resin comprises a structural unit represented by the following Formula (I): 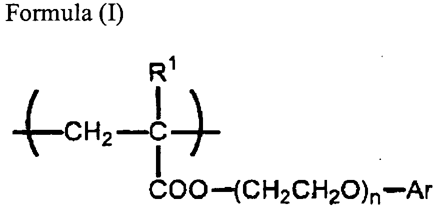
wherein R¹ represents a hydrogen atom or a methyl group; Ar represents a substituted or unsubstituted aromatic group; and n represents an average repeating number in a range of from 1 to 6.

2. A method according to Claim 1, wherein Ar in Formula (I) represents a group derived from a benzene ring, a naphthalene ring, a condensed aromatic ring having 8 or more carbon atoms, an aromatic ring condensed by a heterocycle, or two or more aromatic rings linked to each other.

3. A method according to Claim 1 or Claim 2, wherein the at least one of the first water-insoluble resin and the second water-insoluble resin further comprises at least one hydrophobic structural unit other than the structural unit represented by Formula (I).

4. A method according to Claim 3, wherein the at least one hydrophobic structural unit is a structural unit derived from a vinyl monomer or a hydrophobic structural unit which has an aromatic ring linked, via a linking group, to an atom included in a main chain other than that of the structural unit represented by Formula (I).

5. A method according to Claim 4, wherein the vinyl monomer is a (meth)acrylate, a (meth)acrylamide, a styrene or a vinyl ester, without a hydrophilic functional group.

6. A method according to Claim 4, wherein the hydrophobic structural unit which has an aromatic ring linked, via a linking group, to an atom included in a main chain other than that of the structural unit represented by Formula (I), is a structural unit represented by the following Formula (II) which excludes the structural unit represented by Formula (I): 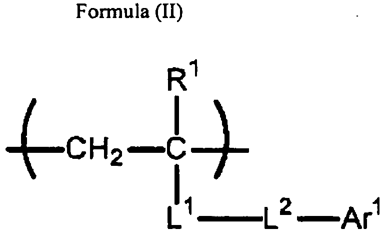 wherein R¹ represents a hydrogen atom, a methyl group, or a halogen atom; L¹ represents *-COO-, *-OCO-, *-CONR²-, *-O-, or a substituted or unsubstituted phenylene group; L² represents a single bond, an imino group (-NH-), a sulfamoyl group or a divalent linking group having 1 to 30 carbon atoms; Ar¹ represents a monovalent group derived from an aromatic ring; R² represents a hydrogen atom or an alkyl group having 1 to 10 carbon atoms; and the symbol * for L¹ represents a position linked to the main chain.

7. A method according to any preceding claim, wherein the first water-insoluble resin and the second water-insoluble resin are the same.

8. A method according to any preceding claim, wherein a mixing amount of the first water-insoluble resin is from 30% by mass to 50% by mass with respect to a mass of the pigment, and a mixing amount of the second water-insoluble resin is from 5% by mass to 20% by mass with respect to a mass of the pigment.

9. A method according to any preceding claim, wherein the pigment is a carbon black.

10. A method according to Claim 9, wherein the carbon black has an average primary particle diameter of 15 nm or less, and a pH in a range from acidic to neutral.

11. A method for inkjet recording comprising the steps of:
preparing a pigment dispersion by a manufacturing method as defined in any preceding claim,
preparing an aqueous ink comprising the pigment dispersion, and
applying the aqueous ink to a recording medium by an inkjet method.

## Patentansprüche

1. Verfahren zur Herstellung einer Pigmentdispersion, das die folgenden Schritte umfasst:
einen ersten Dispersionsvorgang, in dem ein erstes wasserunlösliches Harz, ein organisches Lösungsmittel, ein Pigment und Wasser gemischt und dispergiert werden;
einen zweiten Dispersionsvorgang, in dem ein zweites unlösliches Harz zur resultierenden Dispersion des ersten Dispersionsvorgangs gegeben wird und die Dispersion weiter dispergiert wird; und
einen Entfernungsvorgang, in dem mindestens ein Teil des organischen Lösungsmittels von einer resultierenden wässrigen Dispersion des zweiten Dispersionsvorgangs entfernt wird, worin
mindestens eins aus dem ersten wasserunlöslichen Harz und dem zweiten wasserunlöslichen Harz eine Struktureinheit umfasst, die durch die folgende Formel (I) dargestellt ist: 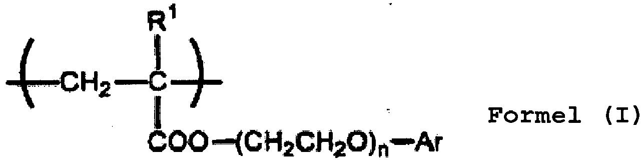
worin R¹ ein Wasserstoffatom oder eine Methylgruppe ist; Ar eine substituierte oder unsubstituierte aromatische Gruppe ist; und n eine durchschnittliche Wiederholungszahl zwischen 1 und 6 ist.

2. Verfahren gemäß Anspruch 1, worin Ar in Formel (I) eine Gruppe darstellt, die von einem Benzolring, einem Naphthalinring, einem kondensierten aromatischen Ring mit 8 oder mehr Kohlenstoffatomen, einem mit einem Heterozyklus kondensiertem aromatischen Ring oder zwei oder mehr aromatischen Ringen, die miteinander verbunden sind, abgeleitet ist.

3. Verfahren gemäß Anspruch 1 oder 2, worin mindestens eins aus dem ersten wasserunlöslichen Harz und dem zweiten wasserunlöslichen Harz ferner mindestens eine hydrophobe Struktureinheit außer der durch Formel (I) dargestellten Struktureinheit umfasst.

4. Verfahren gemäß Anspruch 3, worin die mindestens eine hydrophobe Struktureinheit von einem Vinylmonomer oder einer hydrophoben Struktureinheit abgeleitet ist, die einen aromatischen Ring aufweist, der über eine Verbindungsgruppe mit einem Atom verbunden ist, das in einer anderen Hauptkette als der durch Formel (I) dargestellten Struktureinheit enthalten ist.

5. Verfahren gemäß Anspruch 4, worin das Vinylmonomer ein Methacrylat, ein Methacrylamid, ein Styrol oder ein Vinylester ohne hydrophile funktionelle Gruppe ist.

6. Verfahren gemäß Anspruch 4, worin die hydrophobe Struktureinheit, die einen aromatischen Ring hat, der über eine Verbindungsgruppe mit einem Atom verbunden ist, das in einer anderen Hauptkette als der durch Formel (I) dargestellten Struktureinheit enthalten ist, durch die folgende Formel (II), die die durch Formel (I) dargestellte Struktureinheit ausschließt, dargestellt ist: 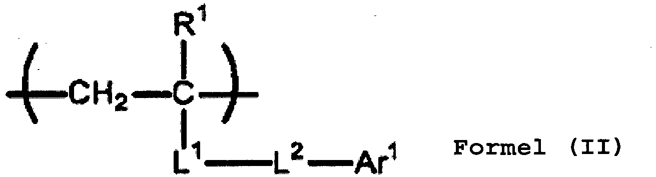 worin R¹ ein Wasserstoffatom, eine Methylgruppe oder ein Halogenatom ist; L¹ *-COO-, *-OCO-, *-CONR²-, *-0- oder eine substituierte oder unsubstituierte Phenylengruppe ist; L² eine Einfachbindung, eine Imingruppe (-NH-), eine Sulfamoylgruppe oder eine zweiwertige Verbindungsgruppe mit 1 bis 30 Kohlenstoffatomen ist; Ar¹ eine von einem aromatischen Ring abgeleitete monovalente Gruppe ist; R² ein Wasserstoffatom oder eine Alkylgruppe mit 1 bis 10 Kohlenstoffatomen ist; und das Zeichen * für L¹ eine zur Hauptkette verbundene Position dar stellt.

7. Verfahren gemäß mindestens einem beliebigen vorangegangenen Anspruch, worin das erste wasserunlösliche Harz und das zweite wasserunlösliche Harz dasselbe sind.

8. Verfahren gemäß mindestens einem beliebigen vorangegangenen Anspruch, worin eine zugemischte Menge des ersten wasserunlöslichen Harzes von 30 bis 50 Gew.-% bezogen auf die Masse des Pigments ist und eine zugemischte Menge des zweiten wasserunlöslichen Harzes von 5 bis 20 Gew.-% bezogen auf die Masse des Pigments ist.

9. Verfahren gemäß mindestens einem beliebigen vorangegangenen Anspruch, worin das Pigment Ruß ist.

10. Verfahren gemäß Anspruch 9, worin der Ruß einen durchschnittlichen primären Teilchendurchmeisser von 15 nm oder weniger und einen pH im Bereich von sauer bis neutral hat.

11. Verfahren zur Tintenstrahlaufzeichnung, das die folgenden Schritte umfasst:
Herstellen einer Pigmentdispersion durch ein in einem beliebigen vorangegangen Anspruch definiertes Herstellungsverfahren,
Herstellen einer wässrigen Tinte, die die Pigmentdispersion umfasst, und
Auftragen der wässrigen Tinte auf ein Aufzeichnungsmedium durch eine Tintenstrahlmethode.

## Revendications

1. Procédé de fabrication d'une dispersion de pigment comprenant :
un premier processus de dispersion qui mélange et disperse une première résine non hydrosoluble, un solvant organique, un pigment et de l'eau ;
un deuxième processus de dispersion qui ajoute une deuxième résine non hydrosoluble à une dispersion résultante du premier processus de dispersion et disperse en outre la dispersion ; et
un processus de retrait qui retire au moins une partie du solvant organique d'une dispersion aqueuse résultante du deuxième processus de dispersion, dans lequel
au moins l'une parmi la première résine non hydrosoluble et la deuxième résine non hydrosoluble comprend un motif structural représenté par la formule (I) suivante : 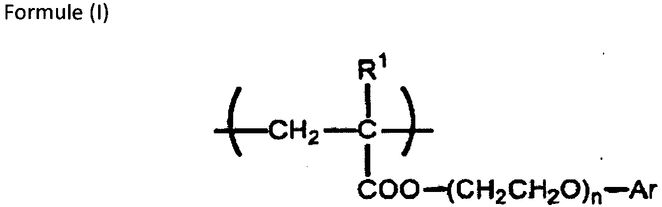
dans laquelle R¹ représente un atome d'hydrogène ou un groupe méthyle ; Ar représente un groupe aromatique substitué ou non substitué ; et n représente un nombre répétitif moyen dans une plage de 1 à 6.

2. Procédé selon la revendication 1, dans lequel Ar dans la formule (I) représente un groupe dérivé d'un cycle benzène, d'un cycle naphtalène, d'un cycle aromatique condensé ayant 8 atomes de carbone ou plus, d'un cycle aromatique condensé par un hétérocycle, ou de deux cycles aromatiques ou plus liés les uns aux autres.

3. Procédé selon la revendication 1 ou la revendication 2, dans lequel la au moins une parmi la première résine non hydrosoluble et la deuxième résine non hydrosoluble comprend en outre au moins un motif structural hydrophobe autre que le motif structural représenté par la formule (I).

4. Procédé selon la revendication 3, dans lequel le au moins un motif structural hydrophobe est un motif structural dérivé d'un monomère vinylique ou un motif structural hydrophobe qui a un cycle aromatique lié, via un groupe de liaison, à un atome inclus dans une chaîne principale autre que celle du motif structural représenté par la formule (I).

5. Procédé selon la revendication 4, dans lequel le monomère vinylique est un (méth)acrylate, un (méth)acrylamide, un styrène ou un ester de vinyle, sans groupe fonctionnel hydrophile.

6. Procédé selon la revendication 4, dans lequel le motif structural hydrophobe qui a un cycle aromatique lié, via un groupe de liaison, à un atome inclus dans une chaîne principale autre que celle du motif structural représenté par la formule (I), est un motif structural représenté par la formule (II) suivante qui exclut le motif structural représenté par la formule (I) : 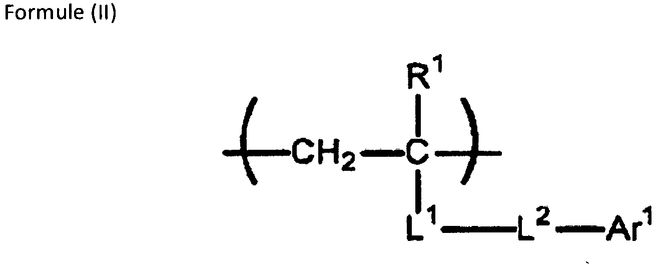 dans laquelle R¹ représente un atome d'hydrogène, un groupe méthyle, ou un atome d'halogène ; L¹ représente *-COO-, *-OCO-, *-CONR²-, *-O-, ou un groupe phénylène substitué ou non substitué; L² représente une liaison simple, un groupe imino (-NH-), un groupe sulfamoyle ou un groupe de liaison divalent ayant 1 à 30 atomes de carbone ; Ar¹ représente un groupe monovalent dérivé d'un cycle aromatique ; R² représente un atome d'hydrogène ou un groupe alkyle ayant 1 à 10 atomes de carbone ; et le symbole * pour L¹ représente une position liée à la chaîne principale.

7. Procédé selon une quelconque revendication précédente, dans lequel la première résine non hydrosoluble et la deuxième résine non hydrosoluble sont identiques.

8. Procédé selon une quelconque revendication précédente, dans lequel une quantité de mélange de la première résine non hydrosoluble est de 30% en masse à 50 % en masse par rapport à une masse du pigment, et une quantité de mélange de la deuxième résine non hydrosoluble est de 5 % en masse à 20 % en masse par rapport à une masse du pigment.

9. Procédé selon une quelconque revendication précédente, dans lequel le pigment est un noir de carbone.

10. Procédé selon la revendication 9, dans lequel le noir de carbone a un diamètre de particules primaires moyen de 15 nm ou moins, et un pH dans une plage d'acide à neutre.

11. Procédé pour enregistrement à jet d'encre comprenant les étapes de :
préparation d'une dispersion de pigment par un procédé de fabrication tel que défini dans une quelconque revendication précédente,
préparation d'une encre aqueuse comprenant la dispersion de pigment, et
application de l'encre aqueuse à un milieu d'enregistrement par un procédé à jet d'encre.
